# EUROPÄISCHE PATENTSCHRIFT

(11) **EP 1 051 084 B1**
(45) Veröffentlichungstag und Bekanntmachung des Hinweises auf die Patenterteilung: **07.05.2003**
(21) Anmeldenummer: 99910181.9
(22) Anmeldetag: 02.02.1999
(51) Int. Cl.: A23L 1/221, C11B 9/02, B01D 3/38, B01D 11/02

(54) **VERFAHREN UND VORRICHTUNG ZUR GEWINNUNG VON PFLANZEN-INHALTSSTOFFEN**
METHOD AND DEVICE FOR EXTRACTING PLANT INGREDIENTS
PROCEDE ET DISPOSITIF POUR EXTRAIRE DES SUBSTANCES VEGETALES

(30) Priorität: 02.02.1998 DE 19804010
(43) Veröffentlichungstag der Anmeldung: 15.11.2000
(73) Patentinhaber: Rinder, Rudolf, 85356 Freising (DE)
(72) Erfinder: Rinder, Rudolf, 85356 Freising (DE)
(74) Vertreter: Koepe, Gerd L., Dipl.-Chem.
(86) Internationale Anmeldenummer: EP9900676
(87) Internationale Veröffentlichungsnummer: WO99038392

(56) Entgegenhaltungen:
- FR-A- 2 435 521
- FR-A- 2 717 492

## Beschreibung

Die vorliegende Erfindung betrifft ein Verfahren und eine Vorrichtung zur Gewinnung von Pflanzen-Inhaltsstoffen, insbesondere zur Gewinnung von Pflanzen-Inhaltsstoffen in reiner, von Zersetzungsprodukten, Folgeprodukten und/oder nicht erwünschten Komponenten freier Form.

Inhaltsstoffe von Pflanzen in einfacher Form zu gewinnen, ist ein seit langer Zeit verfolgtes Ziel der menschlichen Nutzung natürlicher nachwachsender Ressourcen. Insbesondere war die Gewinnung von Pflanzen-Inhaltsstoffen in reiner Form angestrebt. Dies galt - um nur zwei Beispiele statt vieler zu nennen - für die Gewinnung von Duftstoffen aus Pflanzen in der Parfümindustrie genauso wie für die Gewinnung von Aromastoffen aus Pflanzen in der Lebensmittelindustrie.

Gemeinsames Problem aller derartiger Versuche der Gewinnung der Pflanzen-Inhaltsstoffe war, daß sich die gewünschten Substanzen nicht immer leicht von den pflanzlichen Rohstoffen (Blättern, Früchten, Stengeln, Samen, Blüten, Wurzeln etc.) trennen lassen und sich darüber hinaus die gewünschten Stoffe, sobald sie von der natürlichen Umgebung (Blatt, Frucht, Stengel, Samen, Blüte, Wurzel) getrennt vorliegen, unter den Bedingungen, die für die Gewinnung gewählt werden müssen, mitunter relativ schnell verändern und gegebenenfalls dadurch eine nicht hinnehmbare Qualitätseinbuße erleiden oder gar ganz unbrauchbar werden (Hagers Handbuch der pharmazeutischen Praxis, 5. Auflage, Springer-Verlag 1992). Derartige "Folgereaktionen", zu denen thermische Zersetzung, oxidativer Abbau oder durch Licht/Strahlung induzierter Abbau zählen, sind natürlich unerwünscht und schränken die Auswahl der zur Verfügung stehenden Verfahren im Einzelfall stark ein.

Die Druckschrift FR-A 2,717,492 beschreibt ein Verfahren und eine Vorrichtung zum Gewinnen von etherischen Ölen aus Pflanzen wie Koriandersamen durch Extraktion, in dem man die Problematik hoher Behandlungstemperaturen dadurch zu bewältigen versucht, daß man die Temperatur des Wasserdampfs, der mit den Koriandersamen in Kontakt gebracht werden soll, wesentlich senkt, indem man den Druck deutlich unter Atmosphärendruck senkt. Es wird ein Druck im Bereich von 20 bis 50 kPa offenbart.

Ein weiteres Problem des Standes der Technik bestand darin, daß für einzelne Gewinnungsschritte Verfahren und auch Vorrichtungen zur Verfügung standen, die im Labormaßstab brauchbare Ergebnisse lieferten, diese Verfahren (und die zu ihrer Durchführung eingesetzten Vorrichtungen) jedoch nicht oder nur unzureichend auf den Technikumsmaßstab oder gar den Maßstab für die industrielle Durchführung übertragbar waren. Gerade bei Verfahren zur Gewinnung empfindlicher, d. h. leicht thermisch zersetzbarer oder oxidativ abbaubarer Pflanzen-Inhaltsstoffe stellte dies mitunter ein nicht lösbares Problem dar. So können beispielsweise wasserdampfflüchtige Aromastoffe wie etherische Öle aus Pflanzen durch Wasserdampfdestillation aus frischen oder angewelkten Pflanzen gewonnen werden. In größeren Anlagen für diesen Zweck besteht jedoch das Problem einer örtlichen Überhitzung in der Nähe der Wärmequelle, so daß unerwünschte Begleitaromen die Folge sind. Um diese zu vermeiden, muß die Temperatur gesenkt werden, was unerwünscht lange Destillationszeiten zur Folge hat (Paech, K.; Tracey, M. V., Moderne Methoden der Pflanzenanalyse, Springer-Verlag, Bd. 3, S.1-23). Angestrebt, jedoch bisher nicht realisiert waren daher Verfahren und Vorrichtungen, die problemlos vom Labormaßstab auf größere Maßstäbe übertragen werden können und dann von bisherigen Problemen befreite Ergebnisse liefern (Deutsche Apotheker Zeitung, 136(1996), S. 17-28).

Zum dritten bestand ein Bedürfnis nach einem Verfahren und einer Vorrichtung für die Gewinnung von Pflanzen-Inhaltsstoffen, die genügend mobil sind, um sie vor Ort, d. h. am Wachstumsort der Pflanze, einsetzen zu können. Dies wurde als wünschenswert angesehen, um schnell und ohne großen apparativen Aufwand kleinere Chargen einer bestimmten Pflanzensorte vor Ort beispielsweise auf ihren an den Inhaltsstoffen erkennbaren Reifegrad überprüfen zu können. So verändern sich beispielsweise die Hauptkomponenten-Anteile des Öls der Pfefferminz-Pflanze (Menthon, Mentofuran, Menthol, Pulegon und Menthylacetat) im Verlauf der Wachstumsperiode, und der Zeitpunkt der Ernte von Pfefferminz-Pflanzen mit einer bestimmten vorgegebenen Zusammensetzung der genannten Inhaltsstoffe kann anhand einer Schnellanalyse des gewonnenen Pfefferminzöls optimiert werden. Vergeht - wie bei Anwendung herkömmlicher Verfahren und Verwendung herkömmlicher Vorrichtungen - zwischen Probenahme, Probeverarbeitung, Probengewinnung und Probenanalyse eine zu lange Zeit (beispielsweise für den Transport der Probe ins Labor), werden die Werte verfälscht und sind zur Bestimmung des Erntezeitpunkts nur begrenzt oder gar nicht aussagekräftig (Deutsche Apotheker Zeitung, 136(1996), S. 17-28).

Der Erfindung lag also die Aufgabe zugrunde, ein Verfahren zur Gewinnung von Pflanzen-Inhaltsstoffen zu schaffen, mit dem schnell und ohne großen apparativen Aufwand aus frischen oder angewelkten Pflanzen und/oder Pflanzenteilen natürliche Inhaltsstoffe durch Wasserdampfdestillation in möglichst reiner Form gewonnen werden können. Eine weitere Aufgabe war die Schaffung eines Verfahrens zur Gewinnung von Pflanzen-Inhaltsstoffen, das unter genau definierten, reproduzierbaren und auf Anlagen anderen Maßstabs übertragbaren Bedingungen abläuft. Weiter war Aufgabe der Erfindung, ein Verfahren zur Gewinnung von Pflanzen-Inhaltsstoffen zu schaffen, das in schonender Weise empfindliche Inhaltsstoffe aus frischen oder angewelkten Pflanzen und/oder Pflanzenteilen zu gewinnen in der Lage ist. Insbesondere sollten lange Extraktionszeiten und Destillationszeiten sowie den zu gewinnenden Inhaltsstoffen unzuträgliche Reaktionsbedingungen weitgehend vermieden werden.

Eine weitere Aufgabe der Erfindung war, eine Vorrichtung zur Gewinnung von Pflanzen-Inhaltsstoffen zu schaffen, mit der unter schonenden Bedingungen Inhaltsstoffe aus frischen und/oder angewelkten Pflanzen und/oder Pflanzenteilen gewonnen werden können. Es war auch Aufgabe der Erfindung eine Vorrichtung zur Gewinnung von Pflanzen-Inhaltsstoffen bereitzustellen, die genügend mobil ist, um sie auch im Feldeinsatz, d. h. nahe dem Wachstumsort der Pflanze, aus der Inhaltsstoffe gewonnen werden sollen, verwenden zu können. Zudem war es Aufgabe der Erfindung, eine Vorrichtung zur Gewinnung von Pflanzen-Inhaltsstoffen bereitzustellen, deren Betriebsparameter bei der Gewinnung von Pflanzen-Inhaltsstoffen problemlos und ohne größeren experimentellen Aufwand auf Anlagen anderen Maßstabs übertragbar sind.

Die Erfindung betrifft ein Verfahren zur Gewinnung eines oder mehrerer Pflanzen-Inhaltsstoffe aus Pflanzen und/oder Pflanzenteilen durch Wasserdampfdestillation nach dem Patentanspruch 1. Weitere Ausgestaltungen des erfindungsgemäßen Verfahrens ergeben sich aus den Unteransprüchen 2 bis 10.

Die Erfindung betrifft auch eine Vorrichtung zur Gewinnung eines oder mehrerer Pflanzen-Inhaltsstoffe aus Pflanzen und/oder Pflanzenteilen durch Wasserdampfdestillation nach dem Patentanspruch 11. Weitere Ausgestaltungen der erfindungsgemäßen Vorrichtung ergeben sich aus den Unteransprüchen 12 bis 16.

Im Rahmen der vorliegenden Erfindung werden Pflanzen-Inhaltsstoffe aus Pflanzen und/oder Pflanzenteilen gewonnen. Unter Pflanzen-Inhaltsstoffen werden dabei solche chemischen Stoffe verstanden, die in Pflanzen und/oder Teilen davon enthalten sind und deren Gewinnung für Zwecke des weiteren Gebrauchs bzw. der weiteren Verarbeitung beabsichtigt ist. Beispielsweise können dies Aromastoffe, Duftstoffe, Würzstoffe o. ä. sein. Erfindungsgemäß kann im Rahmen des vorliegenden Verfahrens aus Pflanzen und/oder Pflanzenteilen ein einziger darin enthaltener Pflanzen-Inhaltsstoff gewonnen werden; möglich ist jedoch in gleicher Weise die Gewinnung mehrerer Pflanzen-Inhaltsstoffe.

Die Erfindung wird nun unter Bezugnahme auf die beigefügten Figuren beschrieben. Darin zeigen:

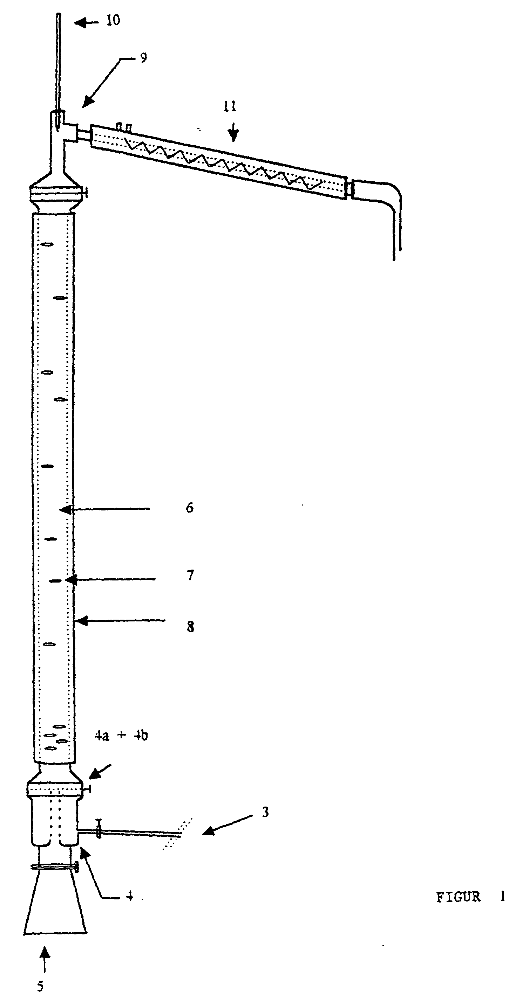

- Figur 1 die erfindungsgemäße Vorrichtung zur Gewinnung von Pflanzen-Inhaltsstoffen;
- Figur 2 die zusammen mit der in Figur 1 gezeigten Vorrichtung verwendbare externe Vorrichtung zur Dampferzeugung;
- Figur 3 die zusammen mit der in Figur 1 gezeigten Vorrichtung verwendbare Vorrichtung zum Auffangen des Kondensats, Trennen des Kondensats in Wasser und weitere Kompoonente(n) und Messen der Menge(n) der weiteren Komponente(n);
- Figur 4 in einer Detaildarstellung den am unteren Ende der Destillationsblase 6 angeordneten Dampfentspannungsraum 4 mit Dampfreguliereinrichtung;
- Figur 5 im Vergleich die Zusammensetzung von Pfefferminzölen aus frischem Kraut, wie sie bei verschiedenen Labor- und Feldverfahren gemäß der Erfindung gemäß Beispiel 1 einerseits und nach dem herkömmlichen Clevenger-Verfahren gemäß Vergleichsbeispiel 1 andererseits erhalten wurde;
- Figur 6 den Verlauf der Destillation nach dem erfindungsgemäßen Verfahren von Beispiel 1 über die gesamte Laufzeit anhand der Menge an gewonnenem Pfefferminzöl;
- Figur 7 die Ausbeute an Pefferminzöl aus getrockneten Pflanzenteilen in Abhängigkeit von der Füllhöhe gemäß Beispiel 2;
- Figur 8 die Ausbeute an Pefferminzöl aus getrockneten Pflanzenteilen in Abhängigkeit von der Füllhöhe gemäß Beispiel 3;
- Figur 9 die Ausbeuten an Zitronenmelissen-Öl bei Destillationen im Laborversuch und im Feldversuch gemäß Beispiel 4, woraus sich die gute Übertragbarkeit des Verfahrens vom Laborversuch auf den Feldversuch ergibt;
- Figur 10 die Ausbeuten an Zitronenmelissen-Öl bei erfindungsgemäßen Destillationen im Laborversuch gemäß Beispiel 4, wobei Frischpflanzen unterschiedlicher Sorten verwendet wurden; und
- Figur 11 den Verlauf der Destillation nach dem erfindungsgemäßen Verfahren von Beispiel 4 über die gesamte Laufzeit anhand der Menge an gewonnenem Zitronenmelissen-Öl.

Das Verfahren umfaßt die Schritte, daß man
- eine vorab gemessene, in Form einer Schichtung in einer Destillationsblase mit einem Verhältnis Durchmesser (D) : Höhe (H) von 1 : 25 bis 1 : 2 angeordnete Menge an Pflanzen und/oder Teilen von Pflanzen bei einem Druck von schwachem Atmosphären-Unterdruck bis schwachem Atmosphären-Überdruck mit Wasserdampf einer Strömungsgeschwindigkeit im Bereich von 0,1 bis 0,5 cm/s in Kontakt bringt;
- durch den Kontakt des Wasserdampfes mit den relativ kälteren Pflanzen und/oder Pflanzenteilen Wasser an den Pflanzen und/oder Pflanzenteilen kondensiert;
- mittels des kondensierten Wassers den bzw. die Pflanzen-Inhaltsstoff(e) aus den Pflanzen und/oder Pflanzenteilen löst und/oder suspendiert;
- die so auf den Pflanzen und/oder Pflanzenteilen gebildete Lösung und/oder Suspension aus Wasser und einem oder mehreren Pflanzen-Inhaltsstoff(en) durch nachströmenden Wasserdampf erwärmt und so Wasser und/oder gelöste bzw. suspendierte(n) Pflanzen-Inhaltsstoff(e) zumindest zum Teil verdampft;
- so gebildeten Dampf an in Strömungsrichtung der Dämpfe angeordneten, relativ kälteren Pflanzen und/oder Pflanzenteilen kondensiert und erneut Pflanzen-Inhaltsstoffe in ebenfalls kondensiertem Wasser aus Wasserdampf löst bzw. suspendiert; die vorangehenden beiden Schritte solange wiederholt, bis die den bzw. die Pflanzen-Inhaltsstoff(e) enthaltende Lösung bzw. Suspension unter abwechselnder Verdampfung und Kondensation durch die Schicht aus Pflanzen und/oder Pflanzenteilen gewandert ist;
- die aus der Schicht der Pflanzen bzw. Pflanzenteile durch weiteren Wasserdampf ausgetriebene Lösung bzw. Suspension zu einem in Strömungsrichtung des Dampfes nachgelagerten Kühler treibt;
- die Lösung bzw. Suspension aus Pflanzen-Inhaltsstoff(en) und Wasser im Kühler kondensiert; und
- das Kondensat in Wasser und Pflanzen-Inhaltsstoff(e) trennt.

Erfindungsgemäß werden Pflanzen-Inhaltsstoffe aus Pflanzen und/oder Pflanzenteilen beliebigen Zustands gewonnen. So kommen beispielsweise lebende Pflanzen und/oder Pflanzenteile infrage, wenn die Pflanzen-Inhaltsstoffe am besten oder bevorzugt aus diesem gewonnen werden können; frisch geerntete Pflanzen bzw. Pflanzenteile oder bereits angewelkte Pflanzen bzw. Pflanzenteile sind erfindungsgemäß besonders bevorzugt. Möglich ist auch, frische und angewelkte Pflanzen bzw. Pflanzenteile nebeneinander zu verwenden, wenn dies die Praxis erfordert bzw. dies im Einzelfall vernünftig und zum Erfolg führend ist. Erfindungsgemäß können ganze Pflanzen oder einzelne Teile davon wie beispielsweise Blätter, Früchte, Stengel, Samen, Blüten, Wurzeln verwendet werden. Möglich ist auch die Verwendung von ganzen Pflanzen neben Teilen von Pflanzen.

Das frische und/oder angewelkte Pflanzenmaterial 7 wird - sofern erwünscht bzw. erforderlich - so weit zerkleinert, daß es mühelos in die Destillationsblase 6 eingefüllt werden kann. Das genau abgewogene Pflanzenmaterial 7 wird nach Abnehmen des Destillationsblasenkopfes 9 unter Bildung einer Schicht aus Pflanzen und/oder Pflanzenteilen in die Destillationsblase 6 eingefüllt. Bevorzugterweise wird eine lockere und gleichmäßige Anordnung des Pflanzenmaterials 7 sichergestellt, ohne daß Verdichtungen und Hohlräume entstehen. Dadurch kann erreicht werden, daß der Wasserdampf gleichmäßig die Schicht aus Pflanzenmaterial 7 durchströmt, und es findet im späteren Schritt des Lösens bzw. Suspendierens des bzw. der Pflanzen-Inhaltsstoffe(s) ein gleichmäßiges Kondensieren, Lösen bzw. Suspendieren und Verdampfen statt.

Welche Höhe die eingefüllte Schicht an Pflanzenmaterial 7, d. h. an Pflanzen und/oder Pflanzenteilen, hat, hängt von dem speziellen Material, dessen Zerkleinerungsgrad, dem Wassergehalt des Materials, der Menge an zu lösenden bzw. zu suspendierenden Pflanzen-Inhaltsstoffen, der später einzustellenden Strömungsgeschwindigkeit des Wasserdampfes und gegebenenfalls auch noch weiteren Parametern ab, kann jedoch von einem Fachmann in diesem Bereich im Rahmen weniger orientierender Vorversuche ermittelt werden. Nach Einfüllen des Pflanzenmaterials 7 wird der Destillationsblasenkopf 9 wieder auf die Destillationsblase 6 aufgesetzt und so verschlossen, daß kein Wasserdampf an der Verschlußstelle entweichen kann.

Das Pflanzenmaterial 7 liegt dabei auf einem mit Löchern geeigneter Größe versehenen Siebboden 4 b, der in seinem Aufbau und seiner Funktion nachfolgend noch im einzelnen beschrieben wird.

Auf an sich bekanntem Weg wird Wasserdampf erzeugt, bevorzugterweise aus entsalztem oder entionisiertem Wasser. Die Dampferzeugung erfolgt in einer bevorzugten Ausführungsform der Erfindung über einen oder mehrere externe Dampferzeuger 2, die mit üblichen Energiequellen 1 zur Erzeugung von Wärmeenergie und Erhitzen des Wassers in dem Dampferzeuger 2 und mit einem Einfülltrichter 0 zum Einfüllen von Wasser ausgestattet sind und über letzteren mit der umgebenden Atmosphäre in Verbindung stehen. Der erzeugte Wasserdampf wird über eine direkte Dampfeinspeisung 3 der in der Destillationsblase 6 angeordneten Schicht aus Pflanzenmaterial 7 zugeführt, besonders bevorzugt an deren unterem Ende unter der eingefüllten Schicht des Pflanzenmaterials 7, und zwar in aufsteigender Richtung.

Es entspricht einer weiteren bevorzugten Ausführungsform der Erfindung, daß die Strömungsgeschwindigkeit des Wasserdampfes aus dem Dampferzeuger 2 über die direkte Dampfeinspeisung 3 in die Destillationsblase 6 und damit durch die Schicht aus Pflanzenmaterial 7 im Bereich von 0,1 bis 0,3 cm/s. Weiter ist es erfindungsgemäß bevorzugt, daß der Druck während des Verfahrens im Bereich von 1,013 ± 0,1 bar liegt, also in der Regel bei Atmosphärendruck.

Erfindungsgemäß wird der im Dampferzeuger 2 erzeugte Wasserdampf mittels der direkten Dampfeinspeisung 3 zur Destillationsblase 6 geleitet. Es entspricht jedoch einer bevorzugten Ausführungsform des erfindungsgemäßen Verfahrens, den Dampf über die direkte Dampfeinspeisung 3 einem unter der Destillationsblase 6 angeordneten Dampfentspannungsraum 4 zuzuleiten. In diesen Dampfentspannungsraum strömt der Dampf mit hoher Geschwindigkeit ein. Die Geschwindigkeit reduziert sich jedoch aufgrund der Tatsache, daß sich die relativ enge Leitung der direkten Dampfeinspeisung 3 zu einem weiten Raum 4 erweitert. Dieser füllt sich mit Wasserdampf, welcher sich zum Teil an den Wänden niederschlägt bzw. kondensiert, jedoch diese damit auch aufheizt und damit eine Kondensation des Wasserdampfes mit zunehmendem Verfahrensfortschritt erschwert. Die Kondensation führt jedoch unter geeigneten Verfahrensbedingungen auch zu einer Verarmung des Dampfes an Wasser ("trockener Dampf"), die von Vorteil sein kann, wenn die zu verarbeitenden Pflanzenteile feucht sind. Kondensiertes Wasser aus dem Wasserdampf in dem Dampfentspannungsraum läuft, soweit er nicht durch weiteren Dampf in Richtung des Dampfstroms mitgerissen wird, in ein unter dem Dampfentspannungsraum 4 angeordnetes Rückflußkondensatgefäß 5.

Sobald sich der gesamte Dampfentspannungsraum 4 mit Wasserdampf gefüllt hat, wird der Wasserdampf durch weiter nachströmenden Wasserdampf nach oben getrieben und erreicht den den Dampfentspannungsraum 4 nach oben in Richtung auf die Destillationsblase 6 abschließenden Siebboden 4 b. Der Siebboden 4 b, auf dem die Schicht des Pflanzenmaterials 7 liegt, aus der die Pflanzen-Inhaltsstoffe entfernt werden sollen, hat neben der Aufgabe, das Pflanzenmaterial 7 zu tragen, die weitere Funktion, den aufströmenden Wasserdampf über die gesamte Querschnittsfläche der Destillationsblase 6 zu verteilen und damit zu verhindern, daß sich einzelne "Gänge" des strömenden Wasserdampfes durch die Schicht aus Pflanzenmaterial 7 bilden, während andere Bereiche der Schicht nicht von Wasserdampf durchströmt werden.

Sobald der Wasserdampf den Siebboden 4 b in aufsteigender Richtung passiert hat, wird er mit dem auf dem Siebboden 4 b ruhenden Pflanzenmaterial 7 in Kontakt gebracht. Solange das Pflanzenmaterial 7 kälter ist als der Wasserdampf, kondensiert dieser an dem Pflanzenmaterial 7. Der bzw. die Pflanzen-Inhaltsstoffe werden durch den direkten Kontakt Wasser (-dampf) - Pflanze(n) bzw. Pflanzenteil(e) erfindungsgemäß entweder unter Bildung einer wäßrigen Lösung des bzw. der Pflanzen-Inhaltsstoff(e) oder unter Bildung einer wäßrigen Suspension des bzw. der Pflanzen-Inhaltsstoff(e) aus der bzw. den Pflanze(n) und/oder Pflanzenteil(en) entfernt.

Dieses Entfernen geschieht ohne eine Zerstörung der Zellen. Ohne an eine Theorie gebunden zu sein, wird vermutet, daß die Inhalte der Pflanzenzellen, die die etherischen Öle tragen, das/die Öl(e) durch Diffusion aus den Zellen austreten lassen. Hydrophile Inhaltsstoffe der Zellen lösen sich in dem an den Oberflächen der Pflanzen bzw. Pflanzenteile kondensierenden Wasser; lipophile Inhaltsstoffe der Zellen werden in dem an den Oberflächen der Pflanzen bzw. Pflanzenteile kondensierenden Wasser suspendiert. Daneben gibt der Wasserdampf die latent in ihm gespeicherte Wärme an die mit ihm in Kontakt kommenden Vorrichtungs-Teile bzw. Pflanzenmaterialien (Pflanzen bzw. Pflanzenteile) ab und hält diese daher bei einer Temperatur im Bereich von knapp 100 °C, beispielsweise 99,5 °C, d. h. nahe dem Siedepunkt des Wassers. Zumindest zum Teil werden so Wasser und/oder gelöste bzw. suspendierte(n) Pflanzen-Inhaltsstoff(e) verdampft. So gebildete Dämpfe werden an in Strömungsrichtung der Dämpfe angeordneten, relativ kälteren Pflanzen und/oder Pflanzenteilen kondensiert und erneut Pflanzen-Inhaltsstoffe in ebenfalls kondensiertem Wasser löst bzw. suspendiert. An dieser Stelle ist festzuhalten, daß keine Entmischung der aus Pflanzen-Inhaltsstoffen und Kondenswasser des Wasserdampfes bestehenden Lösungen bzw. Suspensionen stattfindet, so daß Wasser und Pflanzen-Inhaltsstoffe bis zum Ietzten Kondensationsschritt zusammenbleiben.

Die vorangehenden beiden Schritte der Kondensation und Verdampfung des Wasserdampfes und des/der Pflanzen-Inhaltsstoffe(s) werden kontinuierlich solange wiederholt, bis die den bzw. die Pflanzen-Inhaltsstoff(e) enthaltende Lösung bzw. Suspension unter abwechselnder Verdampfung und Kondensation durch die Schicht aus Pflanzen und/oder Pflanzenteilen an die obere Kante der Schicht gewandert ist.

Weiter nachströmender Dampf treibt die Lösung(en) oder Suspension(en) aus Pflanzen-Inhaltsstoff(en) und Wasser nachfolgend nach oben durch das Restvolumen der Destillationsblase 6 bis zu einem Intensivkühler 11. Dort kondensieren die Lösungen bzw. Suspensionen ein letztes Mal und trennen sich zumindest zum Teil in Wasser und Pflanzen-Inhaltsstoff(e). Diese werden über den Kondensat-Öl-Ablauf 14 einer Vorrichtung zum Auffangen, Trennen und mengenmäßigen Messen der Phasen Wasser und Pflanzen-Inhaltsstoff(e) zugeführt.

Die Destillation ist beendet, wenn kein neuer Pflanzen-Inhaltsstoff mehr in der sich vom Intensivkühler 11 über den Kondensat-Öl-Ablauf 14 zur Kondensat-Meß- und Trennvorrichtung 12 erstreckenden (Teil-) Anlage erscheint.

Nachfolgend wird nun die erfindungsgemäße Vorrichtung zur Gewinnung von Pflanzen-Inhaltsstoffen beschrieben. Die verwendeten Bezugsziffern sind dieselben wie oben, und es wird auf die Figuren Bezug genommen. Soweit die vorliegende Beschreibung bereits Angaben über die Funktionen und Vorteile einzelner Teile der Vorrichtung enthält, wird auf die wiederholende Beschreibung an dieser Stelle verzichtet.

Erfindungsgemäß umfaßt die Vorrichtung zur Gewinnung eines oder mehrerer Pflanzen-Inhaltsstoffe aus Pflanzen und/oder Pflanzenteilen durch Wasserdampfdestillation eine Dampferzeugungseinheit 2, eine Destillationsblase 6, einen mit einem Thermometer 10 versehenen Destillationsblasenkopf 9, einen Kühler 11 und eine Vorlage 12 zum Auffangen des/der gewonnenen Pflanzen-Inhaltsstoff(e). Dabei hat die Destillationsblase 6 Zylinderform und erfindungsgemäß ein Verhältnis Durchmesser (D) zu Höhe (H) von 1 : 25 bis 1 : 2, noch mehr bevorzugt von 1 : 16 bis 1 : 3,5, beispielsweise von 1 : 12 für den Technikums- oder Laborbetrieb oder 1 : (mindestens) 2 für den Feldbetrieb.

Wie bereits oben beschrieben, kann die Erzeugung von Wasserdampf auf jede an sich im Stand der Technik übliche Weise erfolgen. Auch die Einleitung des erzeugten Wasserdampfes in die Vorrichtung kann auf an sich bekannte und bewährte Weise erfolgen. Der Fachmann kennt in großer Anzahl Vorrichtungen zur Erzeugung von Wasserdampf, insbesondere bei Atmosphärendruck, und geeignete Einrichtungen, um diesen Wasserdampf in Anlagen für spezielle Zwecke einzuleiten.

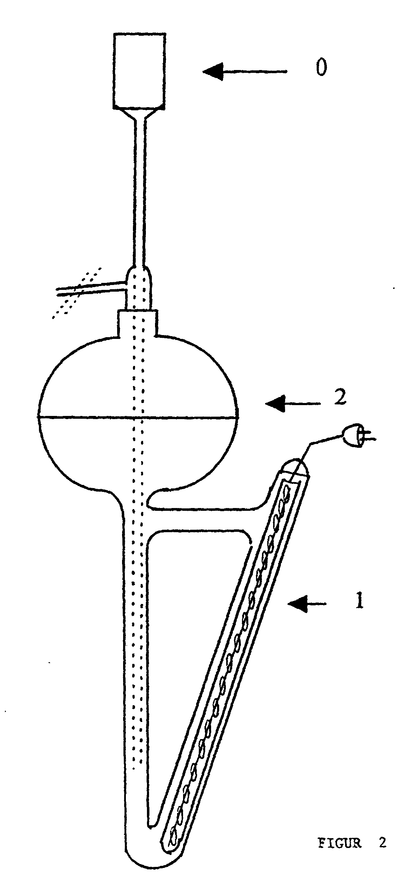

Erfindungsgemäß ist es jedoch bevorzugt, einen externen Dampferzeuger 2 der in Figur 2 gezeigten Art und eine direkte Dampfeinspeisung 3 zu verwenden, wie sie ebenfalls in Figur 2 gezeigt ist. Beide Einrichtungen werden nachfolgend im einzelnen beschrieben.

Der erfindungsgemäß mit Vorzug verwendete Dampferzeuger 2 weist eine übliche Energiequelle 1 auf, mit der direkt oder indirekt Wärmeenergie auf das Wasser aufgebracht wird, aus dem erfindungsgemäß Wasserdampf erzeugt wird. Die Energiequelle kann beispielsweise ein mit einem Heizmittel gefüllter Heizmantel, bei einer mobilen Anlage gemäß der Erfindung auch ein sog. Heizpilz oder ein Heizstab sein. Diese werden elektrisch betrieben und erhitzen das Wasser durch die Gefäßwand. Verwendbar sind natürlich auch andere Heizquellen wie beispielsweise Strahler. In dieser Hinsicht ist die Erfindung keiner Beschränkung unterworfen. Besonders bewährt hat sich ein elektrisch beheizter Keramikstab, der das Wasser, das bevorzugt entsalztes oder entionisiertes Wasser ist, in einem kleinen Gefäßquerschnitt wie beispielsweise einem mit dem Gesamt-Wasservorrat in Verbindung stehenden Glasrohr erhitzt. Durch eine derartige Anordnung wird ein schnelles und effizientes Erhitzen und gleichzeitig auch eine durch die Temperaturunterschiede des Wassers bewirkte Konvektion innerhalb des Dampferzeugers 2 sichergestellt.

Der Dampferzeuger 2 steht über einen Einfülltrichter 0 zum Einfüllen von Wasser mit der Außenumgebung in Verbindung. Dadurch wird sichergestellt, daß die Vorrichtung im wesentlichen bei einem Druck betrieben wird, die dem Druck der Außenumgebung entspricht. Dies ist jedoch nicht zwingend; es können auch Drücke im Bereich von gegenüber der Atmosphäre schwachem Unterdruck bis zu gegenüber der Atmosphäre schwachem Überdruck angewendet werden.

Der auf diesem Weg effizient und energiesparend erzeugte Dampf wird über eine vorzugsweise isolierte direkte Dampfeinspeisung 3 der eigentlichen Destillationsanlage zugeführt. Die direkte Dampfeinspeisung 3 kann mit einem Absperrventil von der Destillationsanlage getrennt werden.

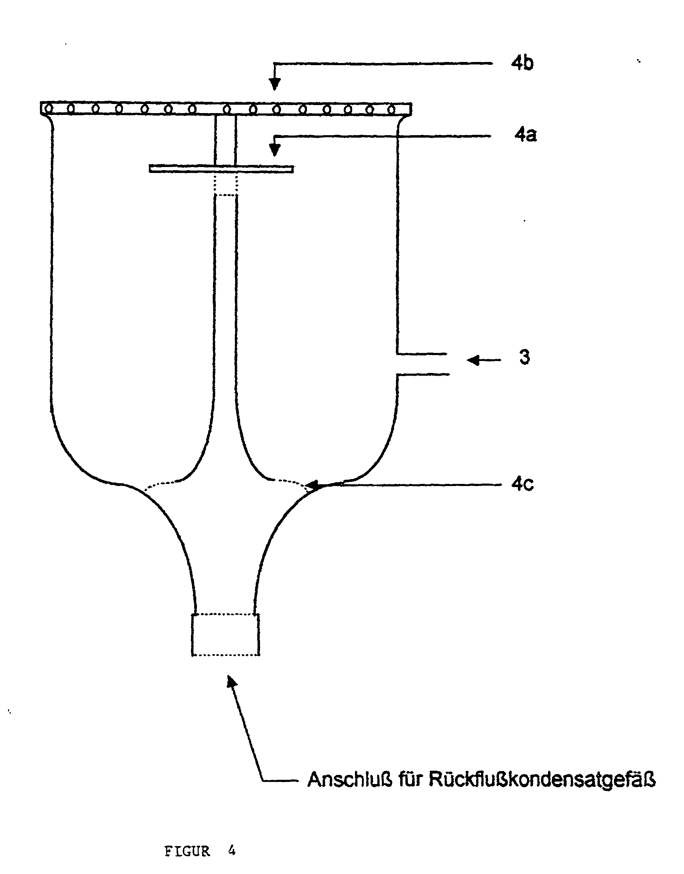

Weiter ist es erfindungsgemäß bevorzugt, daß die zylindrische Destillationsblase 6 an ihrem unteren Ende mit einer Einrichtung 4 zum Entspannen des Dampfes und einer Einrichtung 4 b zur Regulation der Strömungsgeschwindigkeit versehen ist. Dabei kann es sich in einer besonders bevorzugten Ausführungsform der Erfindung um einen Dampfentspannungsraum 4 handeln, wie er im Detail aus Figur 4 zu ersehen ist. Bevorzugterweise weist dieser einen kreisförmigen Querschnitt auf und ist konzentrisch mit der Achse der Destillationsblase 6 unterhalb der Destillationsblase 6 angeordnet. Der Wasserdampf tritt über einen Einlaß aus der direkten Dampfeinspeisung 3, die einen relativ geringen Querschnitt aufweist und daher den Wasserdampf schnell strömen läßt, in den Dampfentspannungraum 4 ein und füllt diesen nach und nach. Eine Entspannung findet deswegen statt, weil der Dampfentspannungsraum einen deutlich größeren Querschnitt aufweist als die direkte Dampfeinspeisung 3. An den Wänden des Dampfentspannungsraums 4 kondensierender Wasserdampf gibt die darin enthaltene Wärme an die Wände ab und heizt diese nach und nach auf. Kondensat, das nicht von nachfolgendem Wasserdampf erhitzt und erneut verdampft und dadurch in Richtung des Wasserdampfstroms (d. h. nach oben) mitgerissen wird, läuft über eine im unteren Teil des Dampfentspannungsraums angeordnete Rückflußkondensat-Öffnung 4 c in ein an einem Anschluß (beispielsweise einem Kugelschliff) am unteren Ende des Dampfentspannunsraums angeordnetes Rückflußkondensatgefäß 5. Weiterer Wasserdampf steigt im Dampfentspannungsraum 4 in Strömungsrichtung (d. h. nach oben) auf und erreicht einen konzentrisch mit der Achse des Dampfentspannungsraums 4 und der Destillationsblase 6 im Dampfentspannungsraum 4 angeordneten Prallteller 4 a. Dieser hat die Fuktion, den Wasserdampf beim Aufwärtsströmen nach außen zu lenken und dadurch zu bewirken, daß aus der Destillationsblase 6 herablaufendes Gemisch aus Wasser und Pflanzen-Inhaltsstoffen erneut verdampft und nach oben in die Destillationsblase 6 getrieben wird. Dadurch wird verhindert, daß der dem herabtropfenden Gemisch entsprechende Produktanteil bei der Gewinnung des/der Pflanzen-Inhaltsstoffe(s) verlorengeht und in das Rückflußkondensatgefäß 5 läuft. Außerdem bewirkt der Prallteller 4 a eine gute Verteilung des Wasserdampfes im gesamten oberen Bereich des Dampfentspannungsraums 4 und damit nachfolgend ein sehr gleichmäßiges Hindurchströmen des Wasserdampfes durch den Siebboden 4 b.

Wie oben bereits beschrieben, dient der Siebboden 4 b nicht nur der Lagerung der Schicht aus Pflanzen und/oder Pflanzenteilen, sondern auch der gleichmäßigen Verteilung des Wasserdampfes über den gesamten Querschnitt der zylindrischen Destillationsblase 6.

Die bevorzugt zylindrische Destillationsblase 6 weist ein Verhältnis Durchmesser (D) zu Höhe (H) in einem bestimmten Bereich auf, wie er oben angegeben ist. Es hat sich nämlich bei umfangreichen Versuchen herausgestellt, daß mit einem unter diesem Wert liegenden Verhältnis D/H eine effiziente und mit hoher Ausbeute ablaufende Gewinnung von Pflanzen-Inhaltsstoffen nicht erreicht werden kann. Genausowenig wird ein deutlich über diesem Wert liegender Wert D/H zu einer erfolgreichen Gewinnung der Pflanzen-Inhaltsstoffe führen. Ohne an dieser Stelle an eine bestimmte Theorie für diesen Effekt gebunden zu sein, der bis heute noch nicht im Detail geklärt werden konnte, wird vermutet, daß ein Wert D/H im oben angegebenen Bereich eine Wirkung auf den strömenden Wasserdampf hat, die der Wirkung eines einen guten "Zug" aufweisenden Kamins vergleichbar ist. Der Wert D/H ist natürlich abhängig von einigen Parametern wie beispielsweise der Dichte der Packung des Pflanzenmaterials 7, der Strömungsgeschwindigkeit des Wasserdampfes, dem Druck und natürlich auch der Art der zu gewinnenden Pflanzen-Inhaltsstoffe. Sofern der Wert jedoch im oben genannten Bereich liegt, kann überraschenderweise eine effiziente, schonende und vollständige Gewinnung der Pflanzen-Inhaltsstoffe in viel kürzerer Zeit erreicht werden als dies bisher möglich war.

Die Destillationsblase ist in einer bevorzugten Ausführungsform auf ihrer Außenseite gegen Wärmeverluste isoliert. Dabei wird bei der Isolation Wert auf ein Material gelegt, das den Gleichgewichtsvorgang der nacheinander ablaufenden und sich wiederholenden Kondensation und Verdampfung des Wassers/Wasserdampfes und der Pflanzen-Inhaltsstoffe möglichst wenig stört. Es wurde nämlich gefunden, daß eine besonders gute Ausbeute der Pflanzen-Inhaltsstoffe, insbesondere der gewünschten, teilweise temperaturempfindlichen Stoffe ohne Bildung unerwünschter Nebenprodukte oder Abbauprodukte erreicht werden kann, wenn die Isolation der Destillationsblase einen ungestörten Kondensations-, Verdampfungs- und Austauschprozeß gewährleistet. Dies wird zumindest zum Teil darauf zurückgeführt, daß durch eine gute Isolation ein Kondensieren des Wassers/Wasserdampfes mit den darin enthaltenen Pflanzen-Inhaltsstoffen an der Außenwand aufgrund besserer Temperaturführung erschwert und Abtropfverluste verhindert werden.

In stromabwärts gerichteter Richtung nach dem Kühler 11 tritt das Kondensat aus Wasser und Pflanzeninhaltsstoffen in eine Vorlage 12 zum Auffangen des/der gewonnenen Pflanzen-Inhaltsstoffe ein. Diese kann die übliche Form aufweisen, wie sie der Fachmann für das Auffangen empfindlicher Substanzen kennt. Insbesondere ist bei der dem Fachmann ohne weiteres möglichen Auswahl der Vorlage 12 zu berücksichtigen, daß es sich bei den gewonnenen Substanzen zum Teil um luftempfindliche und/oder sich bei Lichteinstrahlung zersetzende Substanzen handelt, so daß geschlossene Vorlagen oder lichtgeschützte Vorlagen oder gekühlte Vorlagen im Einzelfall vorzusehen sind. Als vorteilhaft hat es sich auch erwiesen, eine Vorlage vorzusehen, die das Auffangen verschiedener Fraktionen der zu gewinnenden Pflanzen-Inhaltsstoffe ermöglicht, beispielsweise eine Wechselvorlage mit verschiedenen Auffanggefäßen. Solche Vorlagen sind dem Fachmann ebenfalls bekannt.

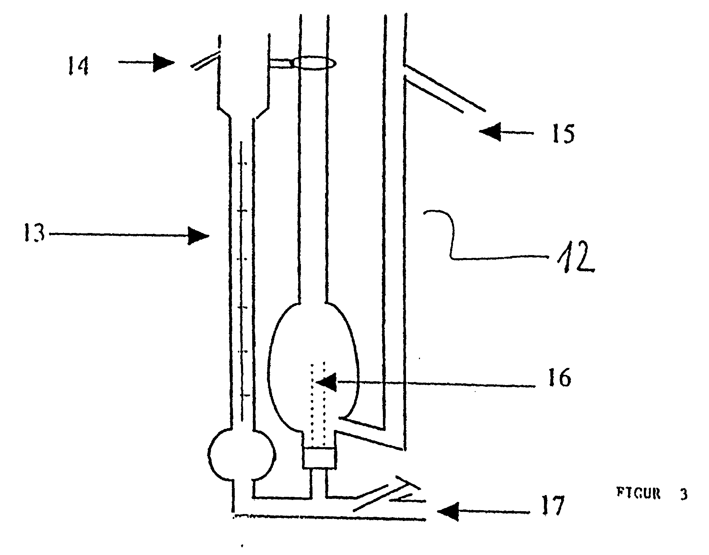

Als besonders vorteilhaft hat es sich jedoch erfindungsgemäß erwiesen, eine Vorrichtung zu verwenden, in der die Vorlage 12 zum Auffangen des/der gewonnenen Pflanzen-Inhaltsstoff(e) eine aus einem Beruhigungsgefäß mit Niveauregulierung 16, einem Kondensatwasserablauf 15, einem Kondensat-Ölablauf 14 mit Öl-Meßstrecke 13 und einem Auslaufhahn 17 bestehende Anordnung ist, wobei Beruhigungsgefäß mit Niveauregulierung 16, Kondensatwasserablauf 15 und Kondensat-Ölablauf 14 mit Ölmeßstrecke 13 in Form eines kommunizierenden Röhrensystems miteinander verbunden sind. Eine solche bevorzugte Vorrichtung ist beispielhaft in Figur 3 gezeigt. Besonders bevorzugt können mehrere derartige Vorrichtungen nebeneinander oder nacheinander für verschiedene Fraktionen des Kondensats verwendet werden.

Die Vorrichtung 12 besteht aus einer Anordnung von drei mit (nachfolgend im einzelnen erläuterten) Zusatzeinrichtungen versehenen, im wesentlichen röhrenförmigen Hohlkörpern zur Aufnahme der Mischung aus kondensiertem Wasserdampf (= Wasser) und kondensierten, in dem Wasser gelösten gewonnenen Pflanzen-Inhaltsstoffen. Die Hohlkörper sind an ihrem jeweils unteren Ende über eine Verbindungsleitung oder ein Verbindungsrohr verbunden.

Das in Flußrichtung der gewonnenen Kondensatmischung erste Rohr ist unmittelbar unter dem Vorstoß des Intensivkühlers angeordnet und weist am oberen Ende einen Rohrabschnitt relativ großen Durchmessers auf, in den die Kondensatmischung hineintropft oder hineinläuft. Dort "beruhigt" sich die Mischung, d. h. es findet ein im wesentlichen langsames Strömen der Flüssigkeit(en) statt. Im Falle der Bildung einer Flüssigkeitsmischung im Kondensat können die (mehr oder weniger nicht mischbaren) Komponenten in diesem Teil der erfindungsgemäß bevorzugten Vorlage bereits vorgetrennt werden, beispielsweise aufgrund ihrer Dichte: Erfahrungsgemäß weisen die zu gewinnenden Pflanzen-Inhaltsstoffe häufig eine niedrigere Dichte als Wasser auf und sondern sich im oberen Bereich des Flüssigkeitsspiegels ab, während das Wasser im erweiterten Teil dieses Rohrs bereits nach unten sinkt. Zwischen dem oberen Teil dieses Rohrs mit größerem Querschnitt, verglichen mit dem Mittelteil desselben Rohrs, und einem unteren Teil desselben Rohrs mit ebenfalls größerem Querschnitt (beispielsweise einem kugelförmig ausgebildeten Teil des Rohrs) findet sich ein Bereich des Rohrs mit relativ kleinem Querschnitt. In diesem Bereich findet sich in einer besonders bevorzugten Ausführungsform der erfindungsgemäßen Vorlage eine Meßstrecke 13 mit einer für die Zwecke der Volumenmessung bekannten Graduierung. Damit können die Volumenmengen der Einzelkomponenten des Kondensats gemessen werden.

Der mittlere Teil der erfindungsgemäß bevorzugten Vorlage 12 besteht ebenfalls aus einem röhrenförmigen Hohlkörper zur Niveauregulierung. Dieses Rohr weist an seinem unteren Ende eine relativ große Erweiterung des Querschnitts auf, die der Aufnahme größerer Volumenmengen Kondensat, beispielsweise größerer Wassermengen zu Beginn des Gewinnungsvorgangs. dient. Von der Erweiterung des Rohrquerschnitts dieses Teils der Vorlage 12 zweigt ein drittes Rohr ab, das in Flußrichtung des Kondensats nachgeordnet ist und dem Ablauf des Kondensat-Wassers dient.

Die erfindungsgemäß bevorzugte Vorlage weist an geeigneter Stelle einen Ablauf für das Kondensat-Wasser und an einer (üblicherweise von der vorgenannten Stelle verschiedenen) anderen Stelle einen Ablauf für die Komponenten des Kondensats auf, die die zu gewinnenden Pflanzen-Inhaltsstoffe enthalten oder gar aus ihnen bestehen.

Die erfindungsgemäße Anordnung kann weitere, dem Fachmann bekannte Einrichtungen enthalten, die dem Zweck einer Gewinnung von Pflanzen-Inhaltsstoffen aus Pflanzen und/oder Pflanzenteilen förderlich sind. Diese sind an spezielle Zwecke (beispielsweise die Gewinnung bestimmter Pflanzen-Inhaltsstoffe) anpaßbar und werden vom Fachmann nach üblichen Kriterien ausgewählt.

Die erfindungsgemäße Vorrichtung und das oben beschriebene erfindungsgemäße Verfahren sind mit Vorteil anwendbar für folgende besonderen Zwecke:
- das kostengünstige Testen von Anlagenteilen in maßstabsgetreuen Größenverhältnissen;
- Investitionsentscheidungen einer in der Praxis üblichen Feld-Destillationsanlage;
- die Suche ("screening") nach neuen Rohstoffpflanzen, insbesondere mit wasserdampfflüchtigen Inhaltsstoffen wie beispielsweise Aromastoffen und Duftstoffen;
- die Durchführung von Reihen- und Serienversuchen;
- die Durchführung von reproduzierbaren Versuchen unter exakter Einhaltung bestimmter Versuchsbedingungen;
- Versuche zur Wahl des richtigen Erntezeitpunktes bestimmter Pflanzen;
- die genaue Überprüfung der zu erwartenden Ausbeuten von zu gewinnenden Pflanzen-Inhaltsstoffen, insbesondere von zu erwartenden Zusammensetzungen der gewonnenen Pflanzen-Inhaltsstoffe;
- Versuche zur Selektion bestimmter Pflanzen-Genotypen;
- qualitative und quantitative Bearbeitung kleiner Mengen an Pflanzenmaterial.

Die Vorzüge des erfindungsgemäßen Verfahrens und der vorstehend beschriebenen erfindungsgemäßen Vorrichtung liegen auf der Hand: Im Gegensatz zu bestehenden Verfahren und Vorrichtungen ist die Nutzung der zugeführten Energie optimal; Energieeinsparungen liegen im Bereich von 50 bis 80 %.

Die Zeit der Gewinnung der Pflanzen-Inhaltsstoffe (Destillationszeit) ist nicht nur unabhängig von der eingefüllten Pflanzenmasse, sondern ist auch deutlich kürzer als bei bekannten Verfahren: Durch konsequente Nutzung der thermodynamischen Möglichkeiten liegen die Destillationszeiten unter 1 h, mitunter im Bereich von 20 bis 30 min, im Vergleich zu 2 bis 3 Stunden im Stand der Technik. Also ist das erfindungsgemäße Verfahren - je nach Verfahrensführung und Ausführungsform der Vorrichtung - dreimal bis sechsmal so schnell wie herkömmliche Verfahren.

Die Bedingungen einer Testanlage sind problemlos auf eine Anlage im Technikumsmaßstab sowie auch auf eine industriell nutzbare Anlage übertragbar. Es muß keine Adaption der Betriebs- und Verfahrensparameter auf eine geänderte Anlagendimension vorgenommen werden.

Es entstehen im Verlauf des Verfahrens bzw. bei Verwendung der Vorrichtung gemäß der Erfindung die angestrebten Produkte in hoher Ausbeute und Reinheit ohne die Qualität beeinträchtigende Nebenprodukte oder Abbauprodukte. Die einzigen Nebenprodukte sind die Pflanzenreste, die nur mit Wasser in Kontakt gekommen sind, also keinen Chemieabfall darstellen (im Gegensatz zu mit Lösungsmitteln in Kontakt gekommenen Pflanzenresten, wie sie zum Teil im Stand der Technik anfielen), und Wasser. Das Verfahren ist also in jeder Beziehung auch ökologisch verträglich.

Die Erfindung wird durch die nachfolgenden Beispiele noch näher erläutert. Diese stellen bevorzugte Ausführungsformen der Erfindung dar und sollen nicht zur Beschränkung der Erfindung herangezogen werden.

### Beispiel 1

Frisches Pfefferminze-Kraut wurde eine bestimmte, aus Tabelle 1 ersichtliche Zeit nach dem Austrieb in einer Größe der Pflanzenmaterial-Teilchen, die sich ebenfalls aus Tabelle 1 ergibt, einer Wasserdampfdestillation nach dem erfindungsgemäßen Verfahren unterworfen. Die sich aus der Natur der Pflanzen und deren Befüllung in die erfindungsgemäße Vorrichtung ergebenden Parameter sind ebenfalls aus Tabelle 1 ersichtlich.

**Tabelle 1**

| **Lauf** | **Alter**^{**1)**} **(Tage)** | **Größe**^{**2)**} **(cm)** | **TS**^{**3)**} **(%)** | **Füll- gew.(g)** | **Füll- höhe(cm)** | **Füll- dichte(g/l)** |
|---|---|---|---|---|---|---|
| a | 110 | 2 | 30 | 269 | 90 | 106 |
| b | 141 | 2 | 18 | 902 | 160 | 199 |
| c | 110 | 2 | 18 | 172 | 80 | 76 |
| d | 110 | 1 | 91 | 57 | 50 | 40 |
| e | 110 | 1 | 91 | 80 | 95 | 30 |
| f | 110 | 1 | 91 | 115 | 150 | 27 |
| Vgl.1 | 82 | 0,5 | 91 | 20 | 10 | 1000^{3a)} |

| | | | | | | |
|---|---|---|---|---|---|---|
| **Anmerkungen:** 1) Alter der Pflanze nach Austrieb (in Tagen); | | | | | | |
| 2) Größe der Pflanzenteile (in cm); | | | | | | |
| 3) Trockensubstanz der Pflanze (in %). | | | | | | |
| 3a) Wasserfüllung mit Droge | | | | | | |

Die Wasserdampfdestillation wurde nach dem erfindungsgemäßen Verfahren unter den in Tabelle 2 angegebenen Bedingungen durchgeführt. Dabei wurde Pefferminzeöl in aus Tabelle 2 ersichtlichen Mengen gewonnen. Der für die Gewinnung anfallende Energiebedarf über die gesamte Dauer der Destillation ist ebenfalls aus Tabelle 2 zu ersehen.

**Tabelle 2**

| **Lauf** | **Zeit**^{**4)**} **min** | **Dampf**^{**5)**} **(ml/min)** | **Wasser**^{**6)**} **(ml)** | **Öl**^{**6)**} **(ml)** | **Ausbeute Öl(%)**^{**7)**} | **Energie**^{**8)**} **(kW)** |
|---|---|---|---|---|---|---|
| a | 30 | 11 | 330 | 1,80 | 0,45 | 0,25 |
| b | 30 | 11 | 330 | 2,10 | 0,26 | 0,25 |
| c | 30 | 11 | 330 | 0,20 | 0,13 | 0,25 |
| d | 30 | 11 | 330 | 1,50 | 0,58 | 0,25 |
| e | 30 | 11 | 330 | 2,30 | 0,63 | 0,25 |
| f | 30 | 11 | 330 | 4,40 | 0,84 | 0,25 |
| Vgl. | 120 | 3 | 360 | 0,23 | 0,25 | 0,25 |

| | | | | | | |
|---|---|---|---|---|---|---|
| **Anmerkungen:** 4) Kondensatlaufzeit Kühler (in min); | | | | | | |
| 5) Kondensat-Wasserdampf-Rate in Kühler (in ml/min); | | | | | | |
| 6) Menge im Kondensat (in ml); | | | | | | |
| 7) Ausbeute Öl (in Vol.-%), bezogen auf Frischmasse bei 20 % Trockensubstanz; | | | | | | |
| 8) Aufgenommene Energie über die gesamte Destillationsdauer (in kW). | | | | | | |

Wie sich aus Tabelle 2 ergibt, war die Ausbeute an Pfefferminzöl größer, wenn die Pflanzenteile stärker zerkleinert wurden. Die Ausbeute war ebenfalls umso größer, je höher die Füllhöhe der zylindrischen Destillationsblase 6 war.

Das Öl hatte im Vergleich zu auf herkömmlichem Wege gewonnenem Öl eine wesentlich höhere Reinheit und Qualität. Der Anteil an durch Thermolyse bzw. Oxidation gebildeten Zersetzungsprodukten war deutlich niedriger als im Stand der Technik. Die Zusammensetzung des erhaltenen Pfefferminzöls aus in mehreren, unter gleichen Bedingungen an identischem Material durchgeführten Extraktions- und Destillationsläufen war in engen Grenzen gleich; das Verfahren ist also gut reproduzierbar.

Dies gilt auch für die leichtflüchtigen Komponenten: Bei einer unter den obigen Verfahrensparametern ablaufenden Wasserdampfdestillation über 29 min. blieb die im Ölanteil des Kondensats nachgewiesene Menge der Pfefferminzöl-Komponenten Linalool, Terpinolen, γ-Terpinen, Ocimen, α-Terpinen, 3-Octanol, Myrcen, β-Pinen, Sabinen und α-Pinen in engen Grenzen gleich.

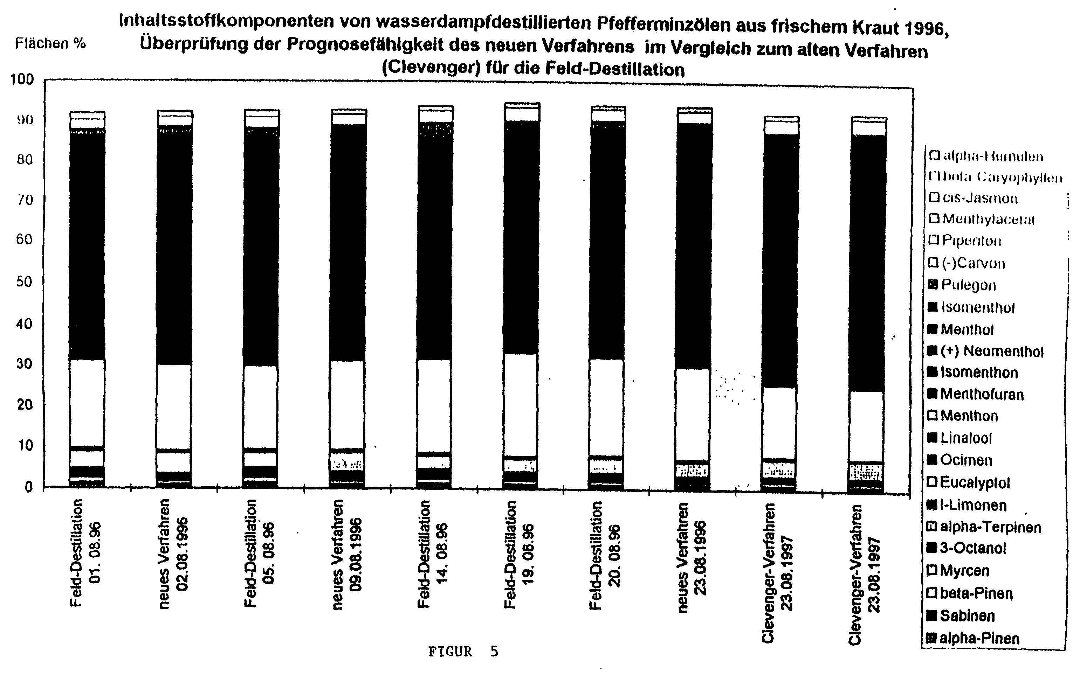

Zudem stellte sich heraus, daß bei einer unter den obigen Verfahrensparametern ablaufenden Wasserdampfdestillation mit einer Testanlage mit einem Durchmesser der zylindrischen Destillationsblase von 10 cm im wesentlichen die gleichen Ergebnisse erzielt wurden wie mit einer Feldanlage mit einem vergleichbaren Durchmesser der zylindrischen Destillationsblase. Dies ist aus der beigefügten Figur 5 ersichtlich. Die Zusammensetzung der Pfefferminzöle, die durch Wasserdampfdestillation mit der erfindungsgemäßen Destillationsvorrichtung und an verschiedenen Tagen einerseits und mit einer vergleichbaren Feld-Destillationsanlage andererseits erhalten wurden, stimmen in engen Grenzen miteinander überein und belegen eine gute Übertragbarkeit des erfindungsgemäßen Verfahrens auf den Feldversuch. Im Gegensatz dazu liefern Wasserdampfdestillationen nach dem herkömmlichen Clevenger-Verfahren (vergleiche die beiden letzten Balken des Diagramms von Figur 5) ein Pfefferminzöl ganz anderer Zusammensetzung. Insbesondere die leichtflüchtigen Komponenten (unterer Teil des jeweiligen Balkens) sind in deutlich kleineren relativen Mengen zugegen.

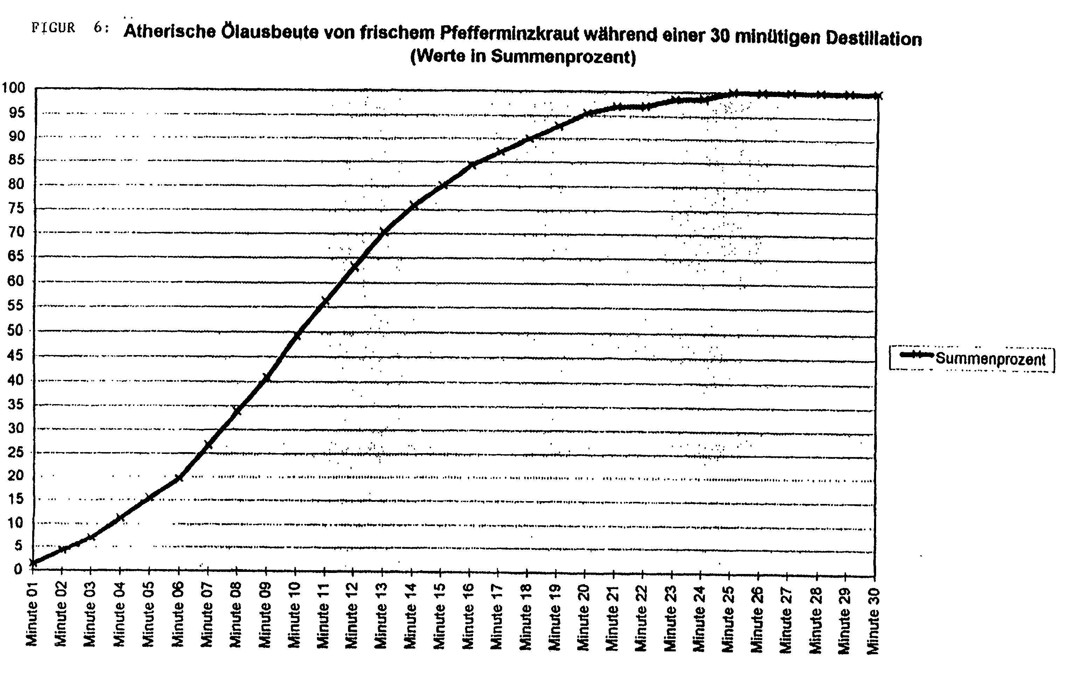

Zudem zeigt Figur 6, daß die Destillation von Pfefferminzöl aus frischem Pfefferminzkraut kontinuierlich und schnell (und damit schonend) abläuft und in 30 min beendet ist.

### Vergleichsbeispiel 1

Die Gewinnung von Pfefferminzöl wurde mit einer herkömmlichen Clevenger-Apparatur durchgeführt. Die Bedingungen der Wasserdampfdestillation und das Ergebnis sind den obigen Tabellen 1 und 2 zu entnehmen. Wie sich aus Tabelle 2 ergibt, ist bei gleichem Energieeinsatz die Ausbeute an Pefferminzöl absolut und relativ (d. h. bezogen auf die Trockensubstanz) deutlich niedriger als beim erfindungsgemäßen Verfahren. Außerdem war die Laufzeit bis zur vollständigen Extraktion allen in dem Pflanzenmaterial enthaltenen Pfefferminzöls deutlich länger als im erfindungsgemäßen Verfahren.

### Beispiel 2

Kraut von der Pfefferminze (Sorte: Mitcham; Anbaujahr 1993; Ernte: 10. August 1993; Pflanzenhöhe: 70 cm) wurde 110 Tage nach dem Austrieb geerntet. Das Kraut wurde auf eine Größe von 1 cm zerkleinert; der Trockensubstanzgehalt der Pflanze betrug 91 %. Das Füllgewicht der zylindrischen Destillationsblase mit getrockneten Pflanzenteilen der Pfefferminze betrug 57 g (Lauf a), 80 g (Lauf b) und 115 g (Lauf c); die Füllhöhe war 50 cm (Lauf a), 95 cm (Lauf b) und 150 cm (Lauf (c). Die Fülldichte der zylindrischen Destillationblase war 40 g/l (Lauf a), 30 g/l (Lauf b) und 27 g/l (Lauf c).

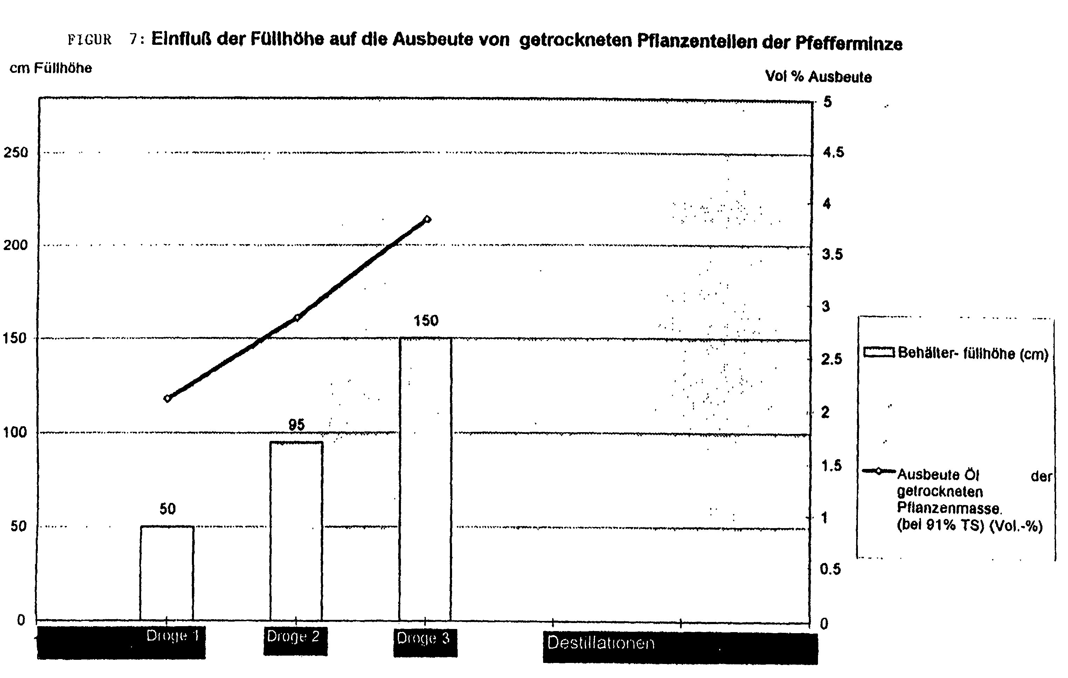

Die Ergebnisse der Wasserdampfdestillationen nach dem erfindungsgemäßen Verfahren sind der nachfolgenden Tabelle 3 sowie Figur 7 zu entnehmen.

Das Öl hatte im Vergleich zu auf herkömmlichem Wege gewonnenem Öl eine ausgezeichnete Reinheit und Qualität. Durch Thermolyse bzw. Oxidation gebildete Zersetzungsprodukte konnten nicht nachgewiesen werden.

**Tabelle 3**

| **Lauf** | **Zeit**^{**4)**} **min** | **Dampf**^{**5)**} **(ml/min)** | **Wasser**^{**6)**} **(ml)** | **Öl**^{**6)**} **(ml)** | **Ausbeute Öl (%)**^{**7)**} | **Energie**^{**8)**} **(kW)** |
|---|---|---|---|---|---|---|
| a | 30 | 11 | 330 | 1,2 | 2,11 | 0,25 |
| b | 30 | 11 | 330 | 2,3 | 2,88 | 0,25 |
| c | 30 | 11 | 330 | 4,4 | 3,83 | 0,25 |
| **Anmerkungen:** wie bei Tabelle 2. | | | | | | |

Wie sich aus Tabelle 3 und Figur 7 ergibt, steigt bei der Wasserdampfdestillation nach dem erfindungsgemäßen Verfahren die Ausbeute an Pfefferminzöl aus getrockneten Pflanzenteilen mit der Füllhöhe an Pflanzenmaterial in der zylindrischen Destillationsblase.

### Beispiel 3

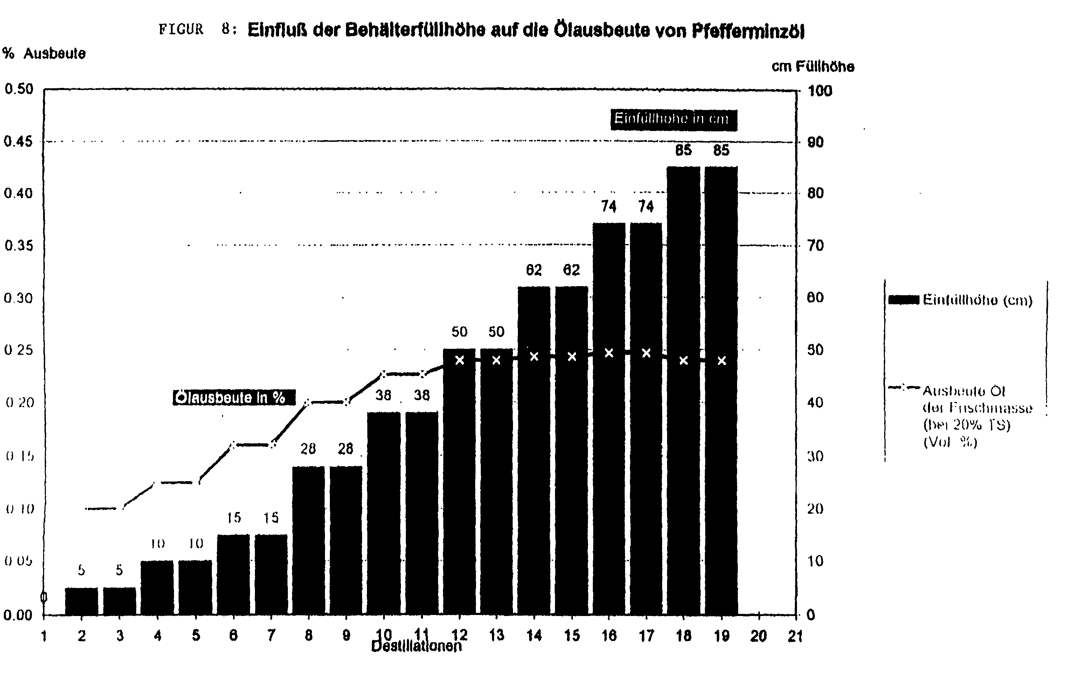

Das Verfahren von Beispiel 2 wurde wiederholt, jedoch wurden frisch geerntete Pfefferminz-Pflanzen (Sorte: Mitcham; Mischung der Pflanzenteile) des Erntejahres 1997 (Anbau im Gewächshaus; Ernte: 25. September 1997) verwendet. Der Einfluß der Befüllhöhe der zylindrischen Destillationsblase mit Pflanzenmaterial auf die Ausbeute an qualitativ hochwertigem, preiswertem Pfefferminzöl ist aus Figur 8 ersichtlich.

Figur 8 zeigt, daß die Ölausbeute mit steigender Füllhöhe steigt, bis eine Füllhöhe von 50 cm erreicht wird. Jenseits dieser Füllhöhe steigt die Ölausbeute - in Abhängigkeit vom Feuchtegehalt der Pflanzenteile - nicht weiter an. Dies bedeutet, daß das zu hoch eingefiillte Pflanzenmaterial nicht oder zumindest nicht vollständig extrahiert werden kann.

### Beispiel 4

Zitronenmelisse-Kraut wurde nach dem erfindungsgemäßen Verfahren einer Wasserdampfdestillation unterzogen. Die Zeit nach dem Austrieb, die Größe der Pflanzenmaterial-Teilchen sowie die sich aus der Natur des Pflanzenmaterials und deren Befüllung in die erfindungsgemäße Vorrichtung ergebenden Parameter sind aus Tabelle 4 ersichtlich.

Die Wasserdampfdestillation wurde nach dem erfindungsgemäßen Verfahren unter den in Tabelle 5 angegebenen Bedingungen durchgeführt. Dabei wurde Zitronenmelisse-Öl in aus Tabelle 5 ersichtlichen Mengen gewonnen. Die bei der Gewinnung aufgenommene Energie über die gesamte Dauer der Destillation ist ebenfalls aus Tabelle 5 zu ersehen.

Wie aus Tabelle 5 ersichtlich ist, war die Ausbeute an Zitronenmelisse-Öl bei Vorgehen nach dem erfindungsgemäßen Verfahren deutlich höher, bei weniger als der halben Energieaufnahme, verglichen mit einem herkömmlichen, mit der Clevenger-Apparatur durchgeführten Verfahren.

Das Öl hatte im Vergleich zu auf herkömmlichem Wege gewonnenem Öl eine wesentlich höhere Reinheit und Qualität. Der Anteil an durch Thermolyse bzw. Oxidation gebildeten Zersetzungsprodukten war deutlich niedriger als im Stand der Technik. Die Zusammensetzung des erhaltenen Zitronenmelisse-Öls aus in mehreren, unter gleichen Bedingungen an identischem Material durchgeführten Extraktions- und Destillationsläufen war in engen Grenzen gleich; das Verfahren ist also gut reproduzierbar.

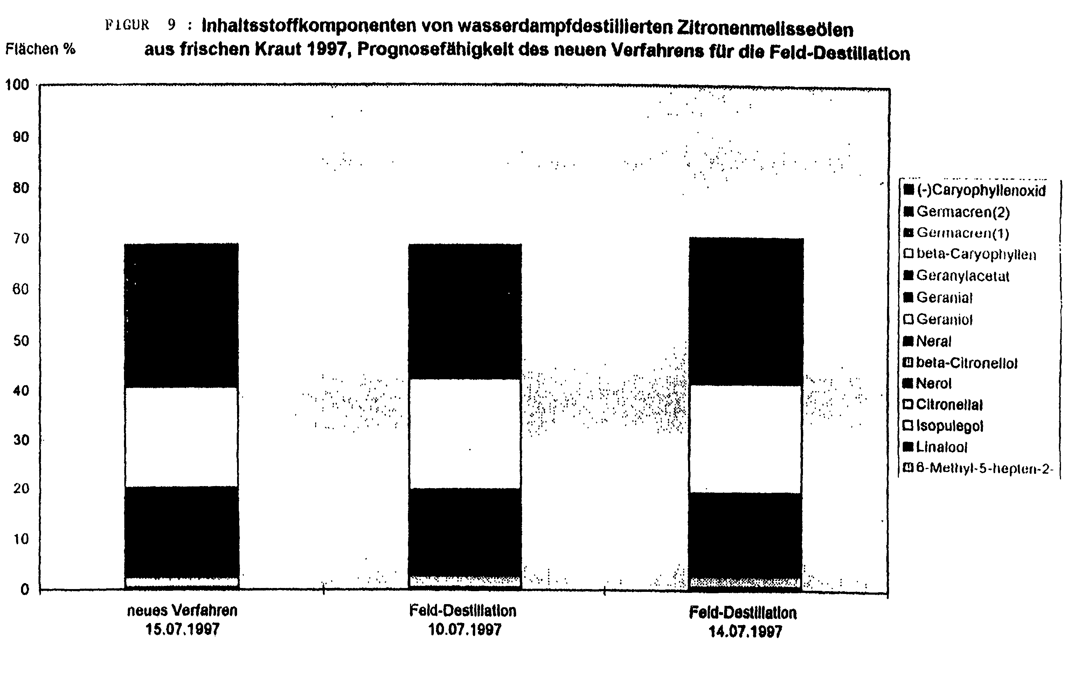

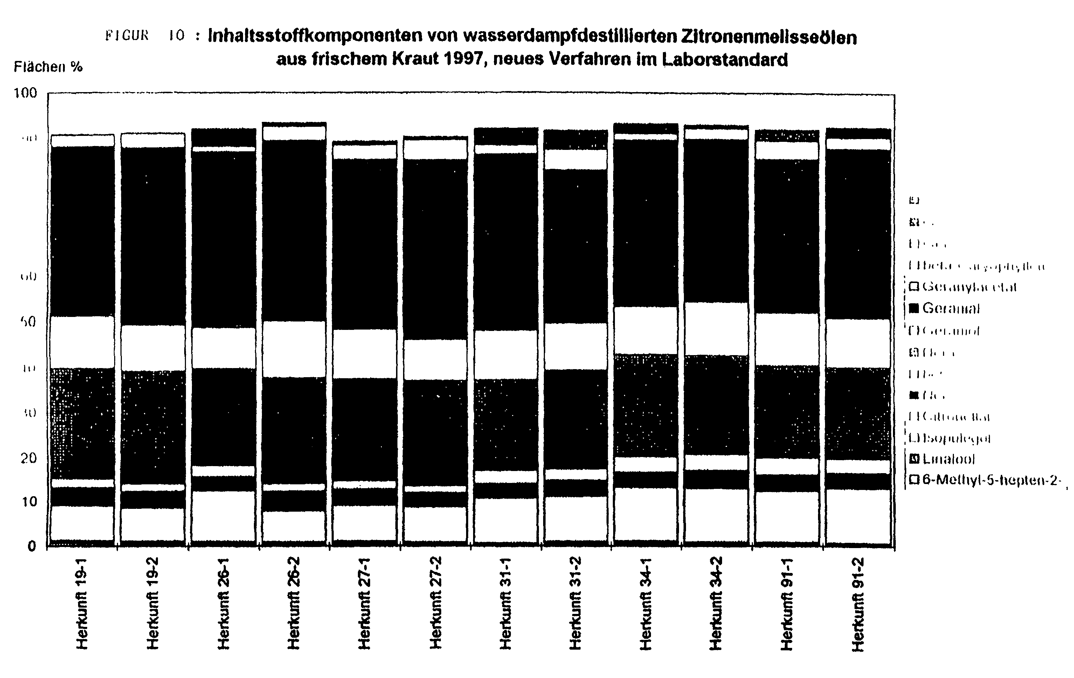

Zudem stellte sich heraus, daß bei einer unter den obigen Verfahrensparametern ablaufenden Wasserdampfdestillation mit einer Testanlage mit einem Durchmesser der zylindrischen Destillationsblase von 10 cm im wesentlichen die gleichen Ergebnisse erzielt wurden wie mit einer Feldanlage mit einem vergleichbaren Durchmesser der zylindrischen Destillationsblase. Dies ist aus der beigefügten Figur 9 ersichtlich und belegt eine gute Übertragbarkeit des erfindungsgemäßen Verfahrens auf den Feldversuch. Die Zusammensetzung der Zitronenmelisse-Öle, die durch Wasserdampfdestillation mit der erfindungsgemäßen Destillationsvorrichtung und an verschiedenen Tagen erhalten wurden, stimmen in engen Grenzen miteinander überein, was aus Figur 10 ersichtlich ist. Im Gegensatz dazu liefern Wasserdampfdestillationen nach dem herkömmlichen Clevenger-Verfahren ein Zitronenmelisse-Öl ganz anderer Zusammensetzung. Insbesondere die leichtflüchtigen Komponenten sind in deutlich kleineren relativen Mengen zugegen.

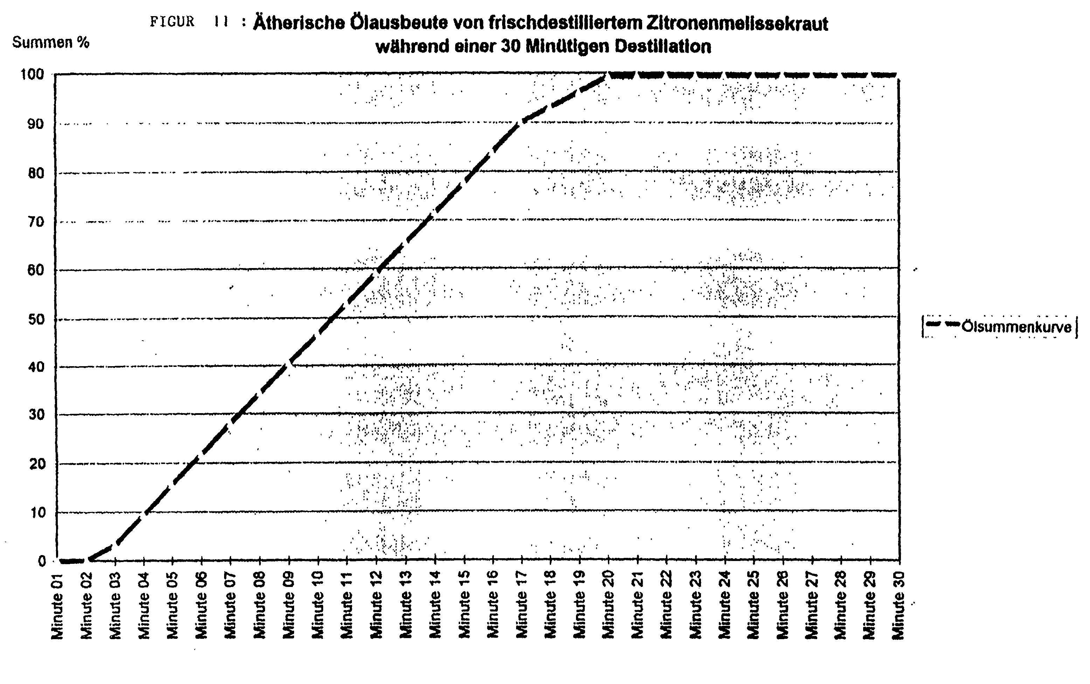

Zudem zeigt Figur 11, daß die Destillation von Zitronenmelisse-Öl aus frischem Zitronenmelisse-Pflanzenmaterial kontinuierlich und schnell (und damit schonend) abläuft und in etwa 20 min beendet ist.

### Vergleichsbeispiel 2

Die Gewinnung von Öl der Zitronenmelisse wurde mit einer herkömmlichen Clevenger-Apparatur durchgeführt. Die Bedingungen der Wasserdampfdestillation und das Ergebnis sind den nachfolgenden Tabellen 4 und 5 zu entnehmen. Wie sich aus Tabelle 5 ergibt, ist bei gleicher Energieaufnahme die Ausbeute an Zitronenmelisse-Öl absolut und relativ (d. h. bezogen auf die Trockensubstanz) deutlich niedriger als beim erfindungsgemäßen Verfahren. Außerdem war die Laufzeit bis zur vollständigen Extraktion allen in dem Pflanzenmaterial enthaltenen Zitronenmelisse-Öls deutlich länger als im erfindungsgemäßen Verfahren.

**Tabelle 4**

| **Lauf** | **Alter**^{**1)**} **(Tage)** | **Größe**^{**2)**} **(cm)** | **TS**^{**3)**} **(%)** | **Füll- gew.(g)** | **Füll- höhe(cm)** | **Füll- dichte(g/l)** |
|---|---|---|---|---|---|---|
| a | 24 | 3 | 19 | 1000 | 160 | 80 |
| b | 28 | 3 | 19 | 1066 | 160 | 85 |
| Vgl.2 | 24 | 0,5 | 91 | 40 | 10 | 1000 |
| **Anmerkungen:** wie bei Tabelle 1. | | | | | | |

**Tabelle 5**

| **Lauf** | **Zeit**^{**4)**} **min** | **Dampf**^{**5)**} **(ml/min)** | **Wasser**^{**6)**} **(ml)** | **Öl**^{**6)**} **(ml)** | **Ausbeute Öl (%)**^{**7)**} | **Energie**^{**8)**} **(kW)** |
|---|---|---|---|---|---|---|
| a | 30 | 20 | 600 | 1,00 | 0,11 | 0,35 |
| b | 30 | 20 | 600 | 0,61 | 0,06 | 0,35 |
| Vgl.2 | 120 | 3 | 360 | 0,10 | 0,05 | 0,72 |
| **Anmerkungen:** wie bei Tabelle 2 | | | | | | |

### Beispiel 5

Im Rahmen des erfindungsgemäßen Verfahrens wurden weitere Pflanzenmaterialien gemäß Tabelle 6 zur Gewinnung ihrer Inhaltsstoffe mit Extraktion/Wasserdampfdestillation behandelt:

**Tabelle 6**

| **Lauf** | **Pflanzenmaterial** | **Pflanzenalter**^{**1)**} **(Tage)** | **Pflanzenteil (geerntet)** |
|---|---|---|---|
| a | Arnika | 235 | Wurzel |
| b | Baldrian | 180 | Wurzel |
| c | Angelika | 180 | Wurzel |
| d | Basilikum | 50 | Kraut |
| e | Petersilie | 70 | Kraut |
| f | Thymian | 69 | Kraut |
| g | Majoran | 73 | Kraut |
| h | Majoran | 74 | Kraut |
| i | Salbei | 73 | Kraut |
| j | Salbei | 75 | Kraut |
| k | Estragon | 66 | Kraut |
| l | Estragon | 66 | Kraut |
| m | Hanf | 70 | Kraut |

Die Größe der Pflanzenmaterial-Teilchen sowie die sich aus der Natur des Pflanzenmaterials und deren Befüllung in die erfindungsgemäße Vorrichtung ergebenden Parameter sind aus Tabelle 7 ersichtlich. Die Wasserdampfdestillation wurde nach dem erfindungsgemäßen Verfahren unter den in Tabelle 8 angegebenen Bedingungen durchgeführt. Dabei wurden Pflanzenöle in aus Tabelle 8 ersichtlichen Mengen gewonnen. Der für die Gewinnung aufgenommene Energiebedarf über die gesamte Dauer der Destillation ist ebenfalls aus Tabelle 8 zu ersehen.

**Tabelle 7**

| **Lauf** | **Größe**^{**2)**} **(cm)** | **TS**^{**3)**} **(%)** | **Füll- gew.(g)** | **Füll- höhe(cm)** | **Füll- dichte(g/l)** |
|---|---|---|---|---|---|
| a | 4 | 25 | 1330 | 160 | 294 |
| b | 4 | 25 | 818 | 155 | 187 |
| c | 4 | 25 | 2053 | 155 | 469 |
| d | 3 | 19 | 492 | 160 | 109 |
| e | 3 | 19 | 289 | 160 | 64 |
| f | 3 | 19 | 430 | 150 | 101 |
| g | 2 | 19 | 515 | 160 | 114 |
| h | 2 | 19 | 337 | 85 | 140 |
| i | 2 | 19 | 520 | 160 | 115 |
| j | 2 | 19 | 271 | 70 | 137 |
| k | 3 | 19 | 457 | 160 | 101 |
| l | 3 | 19 | 459 | 104 | 116 |
| m | 3 | 31 | 510 | 150 | 120 |
| **Anmerkungen:** wie bei Tabelle 1. | | | | | |

**Tabelle 8**

| **Lauf** | **Zeit**^{**4)**} **min** | **Dampf**^{**5)**} **(ml/min)** | **Wasser**^{**6)**} **(ml)** | **Öl**^{**6)**} **(ml)** | **Ausbeute Öl (%)**^{**7)**} | **Energie**^{**8)**} **(kW)** |
|---|---|---|---|---|---|---|
| a | 30 | 11 | 330 | 1,80 | 0,11 | 0,25 |
| b | 30 | 11 | 330 | 0,50 | 0,05 | 0,25 |
| c | 30 | 11 | 330 | 0,70 | 0,03 | 0,25 |
| d | 30 | 11 | 330 | 0,25 | 0,05 | 0,25 |
| e | 30 | 11 | 330 | 0,20 | 0,07 | 0,25 |
| f | 30 | 11 | 330 | 2,21 | 0,54 | 0,25 |
| g | 30 | 11 | 330 | 4,53 | 0,93 | 0,25 |
| h | 30 | 11 | 330 | 1,28 | 0,40 | 0,25 |
| i | 30 | 11 | 330 | 1,85 | 0,37 | 0,25 |
| j | 30 | 11 | 330 | 0,90 | 0,35 | 0,25 |
| k | 30 | 11 | 330 | 2,85 | 0,66 | 0,25 |
| l | 30 | 11 | 330 | 2,82 | 0,65 | 0,25 |
| m | 30 | 11 | 330 | 0,10 | 0,01 | 0,25 |
| **Anmerkungen:** wie bei Tabelle 2. | | | | | | |

Wie sich aus Tabelle 8 ergibt, konnten in allen durchgeführten Versuchen aus den Pflanzenmaterialien gewonnene Inhaltsstoffe (Öle) in ausgezeichneter Ausbeute gewonnen werden. Die Energieaufnahme hierfür war im Vergleich zu aus dem Stand der Technik bekannten Verfahren gering. Die Extraktion/Wasserdampfdestillation lief in allen Fällen glatt und kontinuierlich in einer Gesamtzeit ab, die im Bereich zwischen 20 und 35 min lag.

Die Gewinnung der Öle erfolgte schonend, und durch Zersetzung/Oxidation gebildete Nebenprodukte traten in den erhaltenen Ölen nicht auf. Insbesondere die bei niedrigen Temperaturen siedenden Komponenten der jeweiligen Öle waren im jeweiligen Produkt in größerer Menge vertreten als bei herkömmlichen Verfahren.

Die Rückstände der jeweiligen Extraktions-/Destillationsverfahren waren frei von Inhaltsstoffen, die eine übliche Deponierung oder Kompostierung verhindert hätten. Die Materialien konnten in kurzer Zeit kompostiert und zu pflanzlichem Dünger verarbeitet oder alternativ dazu direkt auf das abgeerntete Feld als Dünger ausgebracht werden.

## Patentansprüche

1. Verfahren zur Gewinnung eines oder mehrerer Pflanzen-Inhaltsstoffe aus Pflanzen und/oder Pflanzenteilen durch Wasserdampfdestillation, wobei man
- eine vorab gemessene, in Form einer Schichtung in einer Destillationsblase mit einem Verhältnis Durchmesser (D) : Höhe (H) von 1 : 25 bis 1 : 2 angeordnete Menge an Pflanzen und/oder Teilen von Pflanzen bei einem Druck von schwachem Atmosphären-Unterdruck bis schwachem Atmosphären-Überdruck mit Wasserdampf einer Strömungsgeschwindigkeit in Bereich von 0,1 bis 0,5 cm/s in Kontakt bringt;
- durch den Kontakt des Wasserdampfes mit den relativ kälteren Pflanzen und/oder Pflanzenteilen Wasser an den Pflanzen und/oder Pflanzenteilen kondensiert;
- mittels des kondensierten Wassers den bzw. die Pflanzen-Inhaltsstoff(e) aus den Pflanzen und/oder Pflanzenteilen löst und/oder suspendiert;
- die so auf den Pflanzen und/oder Pflanzenteilen gebildete Lösung und/oder Suspension aus Wasser und einem oder mehreren Pflanzen-Inhaltsstoff(en) durch nachströmenden Wasserdampf erwärmt und so Wasser und/oder gelöste bzw. suspendierte(n) Pflanzen-Inhaltsstoff(e) zumindest zum Teil verdampft;
- so gebildeten Dampf an in Strömungsrichtung der Dämpfe angeordneten, relativ kälteren Pflanzen und/oder Pflanzenteilen kondensiert und erneut Pflanzen-Inhaltsstoffe in ebenfalls kondensiertem Wasser aus Wasserdampf löst bzw. suspendiert;
- die vorangehenden beiden Schritte solange wiederholt, bis die den bzw. die Pflanzen-Inhaltsstoff(e) enthaltende Lösung bzw. Suspension unter abwechselnder Verdampfung und Kondensation durch die Schicht aus Pflanzen und/oder Pflanzenteilen gewandert ist;
- die aus der Schicht der Pflanzen bzw. Pflanzenteile durch weiteren Wasserdampf ausgetriebene Lösung bzw. Suspension zu einem in Strömungsrichtung des Dampfes nachgelagerten Kühler treibt;
- die Lösung bzw. Suspension aus Pflanzen-Inhaltsstoff(en) und Wasser im Kühler kondensiert; und
- das Kondensat in Wasser und Pflanzen-Inhaltsstoff(e) trennt.

2. Verfahren nach Anspruch 1, worin der Verfahrensdruck bei 1,013 ± 0,1 bar liegt.

3. Verfahren nach Anspruch 1 oder Anspruch 2, worin der Wasserdampf extern erzeugt und der Schicht aus Pflanzen bzw. Pflanzenteilen vom unteren Ende der Schicht in aufsteigender Richtung zugeführt wird.

4. Verfahren nach einem der Ansprüche 1 bis 3, worin die Strömungsgeschwindigkeit des Wasserdampfes im Bereich von 0,1 bis 0,3 cm/s liegt.

5. Verfahren nach einem der Ansprüche 1 bis 4, worin man aus einem oder mehreren in Wasser löslichen Pflanzen-Inhaltsstoff(en) und Wasser eine wäßrige Lösung des bzw. der Pflanzeninhaltsstoff(e) bildet.

6. Verfahren nach einem der Ansprüche 1 bis 4, worin man aus einem oder mehreren in Wasser unlöslichen Pflanzeninhaltsstoff(en) und Wasser eine wäßrige Suspension des bzw. der Pflanzen-Inhaltsstoff(e) bildet.

7. Verfahren nach einem der Ansprüche 1 bis 6, worin das an den Pflanzen und/oder Pflanzenteilen kondensierende Wasser den bzw. die Pflanzen-Inhaltsstoff(e) durch Diffusion aus den den bzw. die Pflanzen-Inhaltsstoff(e) enthaltenden Zellen austreibt.

8. Verfahren nach einem der Ansprüche 1 bis 7, worin man das an den Pflanzen und/oder Pflanzenteilen kondensierende Wasser durch durch nachfolgenden Dampf transportierte Wärme auf einer Temperatur nahe dem Siedepunkt des Wassers hält.

9. Verfahren nach einem der Ansprüche 1 bis 8, worin die Pflanzen bzw. Pflanzenteile gewählt werden unter ganzen Pflanzen, Blättern von Pflanzen, Früchten von Pflanzen, Stengeln von Pflanzen, Samen von Pflanzen, Blüten von Pflanzen und Wurzeln von Pflanzen.

10. Verfahren nach einem der Ansprüche 1 bis 9, worin man aus frischen und/oder angewelkten Pflanzen und/oder Pflanzenteilen Pflanzen-Inhaltsstoffe gewinnt.

11. Vorrichtung zur Gewinnung eines oder mehrerer Pflanzen-Inhaltsstoffe aus Pflanzen und/oder Pflanzenteilen durch Wasserdampfdestillation mit einer Dampferzeugungseinheit (2), einer Destillationsblase (6), einem mit einem Thermometer (10) versehenen Destillationsblasenkopf (9), einem Kühler (11) und einer Vorlage (12) zum Auffangen des/der gewonnenen Pflanzen-Inhaltsstoff(e), worin die Destillationsblase (6) Zylinderform aufweist und ein Verhältnis Durchmesser (D) zu Höhe (H) von 1 : 25 bis 1 : 2 hat.

12. Vorrichtung nach Anspruch 11, worin der Dampferzeuger (2) ein externer Dampferzeuger mit direkter Dampfeinspeisung über eine Speiseleitung (3) in die zylindrische Destillationsblase (6) von deren unterem Ende her ist.

13. Vorrichtung nach Anspruch 11 oder Anspruch 12, worin die Vorlage (12) zum Auffangen des/der gewonnenen Pflanzen-Inhaltsstoff(e) eine aus einem Beruhigungsgefäß mit Niveauregulierung (16), einem Kondensatwasserablauf (15), einem Kondensat-Ölablauf (14) mit Öl-Meßstrecke (13) und einem Auslaufhahn (17) bestehende Anordnung ist, wobei Beruhigungsgefäß mit Niveauregulierung (16), Kondensatwasserablauf (15) und Kondensat-Ölablauf (14) mit Ölmeßstrecke (13) in Form eines kommunizierenden Röhrensystems miteinander verbunden sind.

14. Vorrichtung nach einem der Ansprüche 11 bis 13, worin die zylindrische Destillationsblase (6) an ihrem unteren Ende mit einer Einrichtung (4) zum Entspannen des Dampfes und einer Einrichtung (4 b) zur Regulation der Strömungsgeschwindigkeit versehen ist.

15. Vorrichtung nach Anspruch 14, worin die Einrichtung (4 b) zur Regulation der Strömungsgeschwindigkeit eine am unteren Ende der Destillationsblase (6) angeordnete Siebplatte (4 b) ist.

16. Vorrichtung nach einem der Ansprüche 11 bis 15, worin die Destillationsblase (6) eine Isolation gegen Wärmeverlust aufweist, bevorzugt auf ihrer Außenseite.

## Claims

1. A process for extracting one or more than one plant ingredient from plants and/or parts of plants by steam distillation, said process comprising the steps of
- contacting an amount of plants and/or parts of plants previously measured and arranged in the form layers in a distillation still having a ratio of diameter (D) to height (H) of from 1 : 25 to 1 : 2 with steam of a flow rate in a range of from 0.1 to 0.5 cm/s at a pressure in the range of from slight sub-atmospheric pressure to slight supra-atmospheric pressure;
- condensing water to the plants and/or parts of said plants by said contact of the steam to the relatively cooler plants and/or parts of said plants;
- dissolving and/or suspending in said condensed water said plant ingredient(s) from said plants and/or parts of said plants;
- heating the solution and/or suspension comprising water and one or more than one plant ingredient thus formed on said plants and/or parts of said plants by flowing amounts of steam whereby said water and/or said dissolved or suspended plant ingredient(s) is/are evaporated at least partly;
- condensing the steam thus formed to relatively cooler plants and/or parts of said plants arranged in a downstream flow direction of the steam and dissolving and/or suspending new plant ingredients, respectively, in water from steam condensed to said plants and/or parts of said plants;
- repeating the previous two steps until the solution or suspension, respectively, containing said plant ingredient(s) is migrated through said layers of plants and/or parts of said plants by alternating steps of evaporation and condensation;
- driving the solution and/or suspension removed from said layers of plants and/or parts of said plants by further steam to a condenser arranged in the downstream direction of flow of said steam;
- condensing the solution and/or suspension of said plant ingredient(s) and water in said condenser; and
- separating the condensate into water and plant ingredient(s).

2. The process according to claim 1, wherein the pressure of the process is in the range of 1.013 ± 0.1 bar.

3. The process according to claim 1 or claim 2, wherein the steam is generated externally and is fed to the layer of plants and/or parts of plants from the lower end of said layer in an upward direction.

4. The process according to any of the claims 1 to 3, wherein the steam flow rate of the steam is in the range of from 0.1 to 0.3 cm/s.

5. The process according to any of the claims 1 to 4, wherein an aqueous solution of one or more than one plant ingredient is formed from said one or more than one water-soluble plant ingredient and water.

6. The process according to any of the claims 1 to 4, wherein an aqueous suspension of one or more than one plant ingredient is formed from said one or more than one water-insoluble plant ingredient and water.

7. The process according to any of the claims 1 to 6, wherein the water condensing to the plants and/or parts of plants expels said one or more than one plant ingredient from the plant cells containing said plant ingredient(s) by diffusion.

8. The process according to any of the claims 1 to 7, wherein the water condensing to the plants and/or parts of plants is maintained close to the boiling point of water by the heat transported by the successing amounts of steam.

9. The process according to any of the claims 1 to 8, wherein the plants or parts of plants are selected from whole plants, leaves of plants, fruits of plants, stems of plants, seeds of plants, blossoms of plants and roots of plants.

10. The process according to any of the claims 1 to 9, wherein the plant ingredients are extracted from fresh and/or withered plants and/or parts of plants.

11. A device for extracting one or more than one plant ingredient from plants and/or parts of plants by steam distillation comprising a steam generation unit (2), a distillation still (6), a distillation still head (9) provided with a thermometer (10), a condenser (11) and a receiving vessel (12) for receiving the extracted plant ingredient(s), wherein the distillation still (6) has the shape of a cylinder and has a ratio diameter (D) to height (H) of 1 : 25 to 1 : 2.

12. The device according to claim 11, wherein the steam generation unit (2) is an external steam generation unit feeding the steam directly via a feed line (3) into the cylindrical distillation still (6) from its bottom end.

13. The device according to claim 11 or claim 12, wherein the receiving vessel (12) for receiving the extracted plant ingredient(s) is a settling vessel having a level control (16), a condensed water exit line (15), a condensed oil exit line (14) including an oil measuring tube (13) and an exit tap (17), wherein the settling vessel including the level control (16), the condensed water exit line (15), the condensed oil exit line (14) including the oil measuring tube (13) are interconnected in the form of a communicating tube system.

14. The device according to any of the claims 11 to 13, wherein the cylindrical distillation still (6) is provided with a means (4) for releasing the steam pressure and a means (4 b) for controlling the steam flow rate at its bottom end.

15. The device according to claim 14, wherein the means (4 b) for controlling the steam flow rate is a bottom screen (4 b) located at the bottom end of the distillation still (6).

16. The device according to any of the claims 11 to 15, wherein the distillation still (6) has an insulation against heat loss, preferably on its outer wall.

## Revendications

1. Procédé pour extraire une ou plusieurs substances végétales à partir de végétaux et/ou de fragments de végétaux par entraînement à la vapeur d'eau, dans lequel:
- on met une quantité de végétaux et/ou de fragments de végétaux, mesurée et disposée sous la forme dune couche dans un bouilleur de distillation présentant un rapport diamètre (D): hauteur (H) de 1:25 jusqu'à 1:2 à une pression comprise entre d'une part une légère dépression par rapport à la pression atmosphérique et d'autre part une légère surpression par rapport à la pression atmosphérique, en contact avec de la vapeur d'eau s'écoulant à une vitesse comprise entre 0,1 et 0,5 cm/s;
- à la suite du contact de la vapeur d'eau avec les végétaux, et/ou les fragments de végétaux relativement plus froids, on condense de l'eau sur les végétaux et/ou les fragments de végétaux;
- au moyen de l'eau condensée, on dissout et/ou on met en suspension la ou les substances végétales à partir de végétaux et/ou de fragments de végétaux;
- on chauffe à l'aide de vapeur d'eau en écoulement en aval la solution et/ou la suspension d'eau et d'une ou plusieurs substances végétales ainsi obtenue à partir de végétaux et/ou de fragments de végétaux et on évapore ainsi au moins en partie l'eau et/ou la ou les substances végétales dissoutes (svd) ou mises en suspension;
- on condense la vapeur ainsi formée sur les végétaux et/ou les fragments de végétaux disposés dans la direction d'écoulement des vapeurs et relativement plus froids, et on dissout ou met en suspension à nouveau les substances végétales dans l'eau également condensée à partir de la vapeur d'eau;
- On répète les deux opérations précédentes jusqu'à ce que la solution ou la suspension contenant la ou les substances végétales par évaporation et condensation alternée ait traversé la couche de végétaux et/ou de fragments de végétaux;
- on entraîne la solution ou la suspension extraite de la couche de végétaux ou de fragments de végétaux à l'aide de vapeur d'eau supplémentaire vers un réfrigérant monté en aval, dans la direction d'écoulement de la vapeur;
- on condense dans le réfrigérant la solution ou la suspension de la ou des substances végétales et d'eau; et
- On sépare le condensat en eau et en substances végétales.

2. Procédé selon la revendication 1, dans lequel la pression pendant le déroulement du procédé est de 1,013 ± 0,1 bar.

3. Procédé selon la revendication 1 ou la revendication 2, dans lequel on produit la vapeur extérieurement et on la conduit à la couche de végétaux ou de fragments de végétaux depuis l'extrémité inférieure de la couche dans la direction ascendante.

4. Procédé selon l'une des revendications 1 à 3, dans lequel la vitesse d'écoulement de la vapeur d'eau se situe dans la plage comprise entre 0,1 et 0,3 cm/s.

5. Procédé selon l'une des revendications 1 à 4, dans lequel on forme une solution aqueuse de la ou des substances végétales à partir d'une ou plusieurs substances végétales solubles dans l'eau et d'eau.

6. Procédé selon l'une des revendications de 1 à 4, dans lequel on forme une suspension aqueuse de la ou des substances végétales, à partir d'une ou plusieurs substances végétales insolubles dans l'eau et d'eau.

7. Procédé selon l'une des revendications 1 à 6, dans lequel l'eau se condensant sur les végétaux et/ou les fragments de végétaux extrait la ou les substances végétales par diffusion hors des cellules contenant la ou les substances végétales (sv).

8. Procédé selon l'une des revendications 1 à 7 ascendant vers 7, dans lequel on maintient l'eau se condensant sur les végétaux et/ou les fragments de végétaux à une température proche du poids d'ébullition de l'eau par l'intermédiaire de la chaleur transportée par de la vapeur s'écoulant en aval.

9. Procédé selon l'une des revendications 1 à 8, dans lequel les végétaux ou les fragments de végétaux sont choisis parmi des végétaux entiers, des feuilles de végétaux, des fruits de végétaux, des tiges de végétaux, des graines de végétaux, des fleurs de végétaux et des racines de végétaux.

10. Procédé selon l'une des revendications 1 à 9, dans lequel on récupère des substances végétales à partir de végétaux et/ou de fragments de végétaux frais et/ou ou fanés.

11. Dispositif pour extraire une ou plusieurs substances végétales à partir de végétaux et ou de fragments de végétaux par entraînement à la vapeur d'eau, comprenant une unité de génération de vapeur(2), un bouilleur (6) de distillation, une tête de bouilleur de distillation (9) munie d'un thermomètre (10), un réfrigérant (11) et un collecteur (12) pour piéger la ou les substances végétales récupérée(s), dans lequel dispositif le bouilleur (6) de distillation présente une forme cylindrique et un rapport diamètre (D) sur hauteur (H) de 1:25 à 1:2.

12. Dispositif selon la revendication 11, dans lequel le générateur de vapeur (2) est constitué par un générateur de vapeur extérieur à injection directe de vapeur par une conduite d'alimentation (3) dans le bouilleur cylindrique (6) de distillation à partir de son extrémité inférieure.

13. Dispositif selon la revendication 11 ou la revendication 12, dans lequel le collecteur (12) pour piéger la ou les substances végétales récupérées est constitué par l'agencement d'un récipient de repos à régulation de niveau (16), par une évacuation d'eau condensée (15), par une évacuation (14) d'huile de condensat avec échelle de mesure (13) d'huile et par un robinet (17) d'évacuation, le récipient de repos à régulation de niveau (16), l'évacuation d'eau condensée (15) et l'évacuation (14) d'huile de condensat, avec échelle de mesure (13) d'huile étant reliés les uns aux autres sous la forme d'un système de tubes communicants.

14. Dispositif selon l'une des revendications 11 à 13, dans lequel le bouilleur cylindrique (6) de distillation est muni à son extrémité inférieure d'un organe (4) de détente de la vapeur et d'un organe (4b) de régulation de la vitesse d'écoulement.

15. Dispositif selon la revendication 14, dans lequel l'organe (4b) de régulation de la vitesse d'écoulement est constitué par une plaque de tamis (4b) disposée à l'extrémité inférieure du bouilleur (6) de distillation.

16. Dispositif selon l'une des revendications 11 à 15, dans lequel le bouilleur (6) de distillation comporte une isolation contre les pertes calorifiques, de préférence sur sa face extérieure.
